# EUROPEAN PATENT SPECIFICATION

(11) **EP 3 789 841 B1**
(45) Date of publication and mention of the grant of the patent: **17.05.2023**
(21) Application number: 19796239.2
(22) Date of filing: 25.01.2019
(51) Int. Cl.: G05D 1/00, G05D 1/02, B25J 11/00, G06F 3/01, B25J 9/00

(54) **INFORMATION PROCESSING DEVICE, INFORMATION PROCESSING METHOD, PROGRAM, AND AUTONOMOUS ROBOT CONTROL SYSTEM**
INFORMATIONSVERARBEITUNGSVORRICHTUNG, INFORMATIONSVERARBEITUNGSVERFAHREN, PROGRAMM UND AUTONOMES ROBOTERSTEUERUNGSSYSTEM
DISPOSITIF DE TRAITEMENT D'INFORMATIONS, PROCÉDÉ DE TRAITEMENT D'INFORMATIONS, PROGRAMME, ET SYSTÈME DE COMMANDE DE ROBOT AUTONOME

(30) Priority: 01.05.2018 JP 2018088373
(43) Date of publication of application: 10.03.2021
(73) Proprietor: Sony Group Corporation, Tokyo 108-0075 (JP)
(72) Inventor: WU, Jianing, Tokyo 108-0075 (JP); WATANABE, Sayaka, Tokyo 108-0075 (JP); SATO, Tatsuhito, Tokyo 108-0075 (JP); OZAKI, Natsuko, Tokyo 108-0075 (JP); YOKONO, Jun, Tokyo 108-0075 (JP)
(74) Representative: 2SPL Patentanwälte PartG mbB
(86) International application number: PCT/JP2019/002477
(87) International publication number: WO 2019/211932

(56) References cited:
- WO-A1-2016/072116
- WO-A1-2017/217192
- JP-A- H10 289 006
- JP-A- 2005 111 603
- US-A1- 2017 072 563
- SANTOS JOAO MACHADO ET AL: "Lifelong Information-Driven Exploration to Complete and Refine 4-D Spatio-Temporal Maps", IEEE ROBOTICS AND AUTOMATION LETTERS, IEEE, vol. 1, no. 2, 30 July 2016 (2016-07-30), pages 684-691, XP011602391, DOI: 10.1109/LRA.2016.2516594 [retrieved on 2016-03-08]
- NIKOS C MITSOU ET AL: "Temporal Occupancy Grid for mobile robot dynamic environment mapping", CONTROL&AUTOMATION, 2007. MED '07. MEDITERRANEAN CONFERENCE O N, IEEE, PI, 29 July 2007 (2007-07-29), pages 1-8, XP031204625, ISBN: 978-1-4244-1281-5
- MARJOVI ALI ET AL: "Multi-robot odor distribution mapping in realistic time-variant conditions", 2014 IEEE INTERNATIONAL CONFERENCE ON ROBOTICS AND AUTOMATION (ICRA), IEEE, 31 May 2014 (2014-05-31), - 7 June 2014 (2014-06-07), pages 3720-3727, XP032650646, DOI: 10.1109/ICRA.2014.6907398 [retrieved on 2014-09-22] & MARJOVI ALI ET AL: "Optimal Swarm Formation for Odor Plume Finding", IEEE TRANSACTIONS ON CYBERNETICS, IEEE, PISCATAWAY, NJ, USA, vol. 44, no. 12, 1 December 2014 (2014-12-01), pages 2302-2315, XP011564466, ISSN: 2168-2267, DOI: 10.1109/TCYB.2014.2306291 [retrieved on 2014-11-13]

## Description

### Technical Field

The present technology relates to an information processing apparatus, an information processing method, and a program that are associated with behavior control on an autonomous behavior robot.

### Background Art

Robots that support life as human partners are being recently developed. Such robots include pet-type robots that imitate physical mechanisms and motions of quadruped animals like dogs and cats, cleaning robots, and the like (e.g., Patent Literature 1) .

It is desirable for such a robot to perform a behavior more suitable for the surrounding environment where that robot is located.

US 2017 / 0072563 A1 discloses a method for generating a spatio-temporal object inventory based on object observations from mobile robots and determining, based on the spatio-temporal object inventory, monitoring parameters for the mobile robots for one or more future time periods. Further, it is discloses that the spatio-temporal object inventory can be used to determine a quantity of movements of objects that occur in one or more areas of the environment when one or more particular criteria are satisfied-and using that determination to determine monitoring parameters that can be utilized to provide commands to one or more of the mobile robots that influence one or more aspects of movements of the mobile robots at future time periods when the one or more particular criteria are also satisfied.

SANTOS JOAO MACHADO ET AL "Lifelong Information-Driven Exploration to Complete and Refine 4-D Spatio-Temporal Maps" discloses an exploration method that allows mobile robuts to build and maintain spatio-temporal models of changing environments. It discusses the problem by application of information-theoretic exploration methods to spatio-temporal models that represent the uncertainty of environment states as probabilistic functions of time. This allows to predict the potential information gain to be obtained by observing a particular area at a given time, and consequently, to decide which locations to visit and the best times to go there.

NIKOS C MITSOU ET AL: "Temporal Occupancy Grid for mobile robot dynamic environment discloses mapping" discloses an occupancy Grid structure to address the problem of generating valid maps for dynamic indoor environments. A spatiotemporal access method to store all sensor values (instead of preserving only one value for each cell as in the common occupancy grid case) is proposed. By searching for similar time series, moving objects that appear only in a limited number of possible configurations (eg. doors or chairs) can be detected.

MARJOVI ALI ET AL "Multi-robot odor distribution mapping in realistic time-variant conditions" discloses a multi-robot odor distribution mapping through time series analysis. Considering the conditions of real-world environments where the chemical concentration distribution is patchy, intermittent and time-variant, we propose a method to incorporate the temporal and spatial aspect of sensory data into the problem of odor distribution mapping.

### Citation List

### Patent Literature

Patent Literature 1: Japanese Patent Application Laid-open No. 2013-31897

### Disclosure of Invention

### Technical Problem

In view of the above-mentioned circumstances, it is an object of the present technology to provide an information processing apparatus, an information processing method, and a program that enable an autonomous behavior robot to perform a behavior more suitable for the surrounding environment.

### Solution to Problem

In order to accomplish the above-mentioned object, an information processing apparatus, an information processing method, and a program according to the independent claims are provided. Preferred embodiments are given in the dependent claims.

### Advantageous Effects of Invention

As described above, in accordance with the present technology, it is possible for an autonomous behavior robot to perform a behavior more suitable for the surrounding environment. It should be noted that the effects described here are not necessarily limitative and any effect described in the present disclosure may be provided.

### Brief Description of Drawings

[Fig. 1] A diagram showing an autonomous behavior robot control system according to a first embodiment of the present technology, which is a block diagram showing a configuration of an autonomous behavior robot.
[Fig. 2] A diagram showing a database that constitutes a spatio-temporal map.
[Fig. 3] An example of a data structure of the spatio-temporal map generated by the autonomous behavior robot.
[Fig. 4] A diagram showing a user existence probability distribution in a house for each time and for each weather, which is generated on the basis of environment information stored in the spatio-temporal map.
[Fig. 5] A diagram showing a user existence probability distribution in the house for each time and for each weather, which is generated on the basis of the environment information stored in the spatio-temporal map.
[Fig. 6] A diagram showing a user existence probability distribution in the house for each time and for each weather, which is generated on the basis of the environment information stored in the spatio-temporal map.
[Fig. 7] A diagram showing a user existence probability distribution in the house for each time and for each weather, which is generated on the basis of the environment information stored in the spatio-temporal map.
[Fig. 8] A diagram showing an object existence probability distribution in the house for each time and for each weather, which is generated on the basis of the environment information stored in the spatio-temporal map.
[Fig. 9] A diagram showing an object existence probability distribution in the house for each time and for each weather, which is generated on the basis of the environment information stored in the spatio-temporal map.
[Fig. 10] A diagram showing an object existence probability distribution in the house for each time and for each weather, which is generated on the basis of the environment information stored in the spatio-temporal map.
[Fig. 11] A diagram showing an object existence probability distribution in the house for each time and for each weather, which is generated on the basis of the environment information stored in the spatio-temporal map.
[Fig. 12] A diagram showing an example of a case in a living room, which has been extracted on the basis of the data structure shown in Fig. 3.
[Fig. 13] A diagram showing an example of extracting a correlation between information related to a person and information related to an object.
[Fig. 14] A diagram showing an occurrence probability example of each of information related to a person, information related to an object, and information related to a pet, which have been calculated on the basis of the data structure of Fig. 3, and a correlation example extracted by using it.
[Fig. 15] A diagram showing an example of a method of determining information to be added to the spatio-temporal map.
[Fig. 16] A flowchart showing a procedure to generate the spatio-temporal map.
[Fig. 17] A display example of the person existence probability distribution generated on the basis of the spatio-temporal map.
[Fig. 18] A display example of the person existence probability distribution generated on the basis of the spatio-temporal map.
[Fig. 19] A display example showing a correlation between the person and the object, which has been generated on the basis of the spatio-temporal map.
[Fig. 20] A display example of behavior contents of the autonomous behavior robot, which has been generated on the basis of the spatio-temporal map.
[Fig. 21] A diagram showing an autonomous behavior robot control system according to a second embodiment.
[Fig. 22] A diagram showing an autonomous behavior robot control system according to a third embodiment. Mode(s) for Carrying Out the Invention

An autonomous behavior robot control system according to each embodiment of the present technology will be described below with reference to the drawings. Examples of an autonomous behavior robot include a pet-type robot and a humanoid robot that support life as human partners, which are principally used for communication with humans, and a cleaning robot which supports human life, and the like.

An autonomous behavior robot according to each embodiment to be described below is configured to autonomously select a behavior on the basis of a spatio-temporal map including surrounding environment information. It is assumed that one or more autonomous behavior robots are arranged in a certain predetermined space range, for example, in one house.

The surrounding environment information of the autonomous behavior robot is context information such as information related to a person, information related to an object, information related to a pet, and weather information that change spatially and temporally. The context information indicates surrounding environment of a work space of the autonomous behavior robot. The weather information includes information about sunny or rainy weather, temperature, humidity, wind, and the like.

The spatio-temporal map reflects the lifestyle of a user, and the autonomous behavior robot autonomously performs a behavior for the user on the basis of the spatio-temporal map.

The spatio-temporal map stores environment information such as space information, time information related to date, season, day of the week, holiday, and a time, information related to a person, information related to an object, information related to a pet, and weather information, and correlation information.

The information related to a person includes person information identifying the person, indicating who the person is, action information indicating what kind of action the person is doing, state information indicating what kind of state the person is in, and the like. The person information is typically a captured image of the person and may include attribute information about age, gender, and the like.

The information related to an object includes object information identifying the object, indicating what the object is, state information indicating what kind of state the object is in, and the like.

The information related to a pet includes pet information identifying the kind of pet, indicating what the pet is, action information indicating what kind of action the pet is doing, and the like.

The correlation information is information in which at least two of weather information, space information, time information, person information, person action information, person state information, object information, object state information, pet information, and pet state information are associated with each other. The correlation information is obtained on the basis of a case extracted from the obtained environment information. As the number of similar stored cases increases, the accuracy of the correlation information related to that case is enhanced.

In the following embodiment, the description will be given showing a case where a predetermined environment is a house in which a family including three members, Father, Mother, and Kid as users of the autonomous behavior robot and a cat as a pet live as an example. This house is constituted by five spaces (locations) of a living room with a kitchen, a bedroom, an entrance to the house (hereinafter, referred to as entrance), a water closet (W.C.), and a bathroom.

In the autonomous behavior robot system according to the present technology, environment information recognized on the basis of various types of data obtained when the autonomous behavior robot autonomously moves and correlation information extracted on the basis of this environment information are stored in the spatio-temporal map. In this way, the spatio-temporal map is updated. Specifically, information to be added to the spatio-temporal map is determined on the basis of the spatio-temporal map, and the autonomous behavior robot autonomously moves and obtains various types of data in order to obtain this information.

Further, in the autonomous behavior robot system according to the present technology, a situation determination is performed and an autonomous behavior control signal is generated in consideration of a situation determination result. Examples of the situation determination include limiting the behavior range to be narrower in a situation where battery charge is small and the like. The details will be described later.

Hereinafter, the autonomous behavior robot system will be described in detail.

### <First Embodiment>

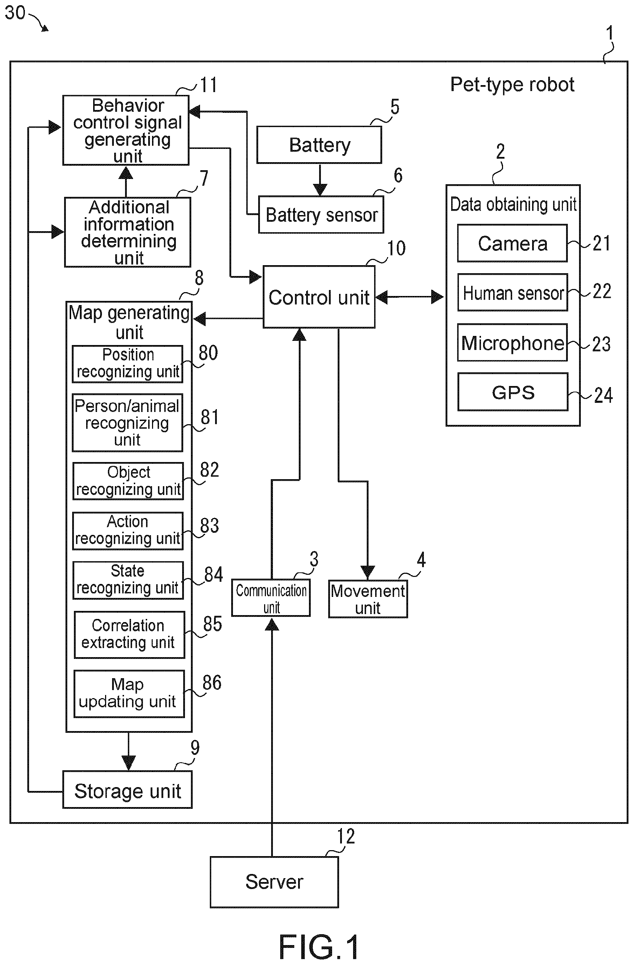

Fig. 1 is a diagram describing an autonomous behavior robot control system according to the present embodiment, which shows a block diagram showing a configuration of an autonomous behavior robot as an information processing apparatus.

### (Schematic Configuration of Autonomous Behavior Robot Control System)

As shown in Fig. 1, an autonomous behavior robot control system 30 includes a pet-type robot 1 as the autonomous behavior robot and a server 12.

The server 12 provides time information including date, day of the week, time, holiday, and the like, and weather information indicating the surrounding environment of the house as an activity range of the pet-type robot 1, the weather information including sunny or rainy weather, temperature, humidity, wind, and the like. The pet-type robot 1 is communicably connected to the server 12 and obtains time information and weather information from the server 12.

Further, the pet-type robot 1 may be configured to be communicable with an electronic apparatus such as a portable phone and a personal computer.

### (Configuration of Pet-Type Robot)

The pet-type robot 1 includes a data obtaining unit 2, a communication unit 3, a movement unit 4, a battery 5, a battery sensor 6, an additional information determining unit 7, a map generating unit 8, a storage unit 9, a control unit 10, and a behavior control signal generating unit 11.

The data obtaining unit 2 obtains data related to the surrounding environment information of the pet-type robot 1. More specifically, the data obtaining unit 2 obtains, as the data related to the surrounding environment information, surrounding-image data, data about the presence/absence of the surrounding person(s), surrounding-sound data, its own position data, and the like.

The data obtaining unit 2 includes a camera 21 as an image obtaining unit that obtains surrounding-image data, a human sensor 22 as a person detecting unit, a microphone 23 as a sound obtaining unit that collects the surrounding sounds, and a global positioning system (GPS) 24 as a position data obtaining unit.

The communication unit 3 communicates with the server 12, obtains time information and weather information, and sends the obtained time information and weather information to the control unit 10.

The movement unit 4 moves the location of the pet-type robot 1. The movement unit 4 is controlled by the control unit 10 such that the pet-type robot 1 moves on the basis of a behavior control signal generated by the behavior control signal generating unit 11.

The battery 5 supplies power supply to each circuit of the pet-type robot 1.

The battery sensor 6 detects battery charge of the battery 5. A battery capacity detection signal detected by the battery sensor 6 is sent to the behavior control signal generating unit 11.

The storage unit 9 includes a memory device such as a RAM and a non-volatile recording medium such as a hard disk drive, and stores a program for causing the pet-type robot 1 as the information processing apparatus to execute processing related to generation of a behavior control signal for the pet-type robot 1.

Further, the storage unit 9 stores the generated and updated spatio-temporal map.

The program stored in the storage unit 9 is for causing the pet-type robot 1 to execute processing including a step of generating a spatio-temporal map on the basis of data obtained by the data obtaining unit 2 of the pet-type robot 1 and a step of causing the pet-type robot 1 to move and causing the data obtaining unit 2 to obtain data in order to obtain information to be added to the spatio-temporal map.

The control unit 10 sends various types of data obtained by the data obtaining unit 2 and time information and weather information received from the communication unit 3 to the map generating unit 8.

On the basis of a behavior control signal sent from the behavior control signal generating unit 11 to be described later, the control unit 10 controls the movement unit 4 to move the pet-type robot 1 and controls the data obtaining unit 2 to obtain various types of data.

The map generating unit 8 generates and updates a spatio-temporal map on the basis of the various types of data obtained by the data obtaining unit 2. The generated and updated spatio-temporal map is stored in the storage unit 9. The map generating unit 8 includes a position recognizing unit 80, a person/animal recognizing unit 81, an object recognizing unit 82, an action recognizing unit 83, a state recognizing unit 84, a correlation extracting unit 85, and a map updating unit 86.

The position recognizing unit 80 recognizes the location by using the position data obtained by the GPS 24. Based on the recognition result, space information related to the layout in the house including the living room, the bedroom, the entrance, the W.C., and the bathroom is constructed.

The person/animal recognizing unit 81 recognizes whether or not the user or the pet is located in the vicinity of the pet-type robot 1 on the basis of the detection result of the human sensor 22. Since the human sensor 22 senses the heat of an object, the human sensor 22 is capable of sensing an animal such as a cat and a dog in addition to a person.

The person/animal recognizing unit 81 determines and identifies a person and an animal existing in the surroundings. The person/animal recognizing unit 81 recognizes the person and the pet using the captured image data obtained by the camera 21.

The person/animal recognizing unit 81 refers to captured image data of a certain person first obtained by the camera 21 and image data obtained by the camera 21 thereafter, performs well-known face recognition processing, and recognizes an imaging target person (person recognition processing). Further, the age and the gender may be estimated using the image data. The recognition processing data is registered in the spatio-temporal map.

Similarly, the person/animal recognizing unit 81 refers to captured image data of a certain pet first obtained by the camera 21 and the image data obtained by the camera 21 thereafter, performs well-known recognition processing, and recognizes an imaging target animal (animal recognition processing). The recognition processing result is registered in the spatio-temporal map.

In addition, the person/animal recognizing unit 81 may refer to sound data of a person or animal first obtained by the microphone 23 and sound data obtained thereafter, perform recognition processing, and recognize the person or animal whose sound is a target (person/animal recognition processing).

Alternatively, the person and the animal may be recognized by using both the captured image data and the sound data.

The object recognizing unit 82 is capable of recognizing an imaging target object on the basis of the captured image data obtained by the camera 21 (object recognition processing). For example, it is possible to recognize the imaging target object by performing image processing on feature amounts such as contours, edges, corners, brightness changes, and colors and artificial geometric patterns such as a three-dimensional shape of the object and a barcode attached to the object. Alternatively, information such as an ID may be read from an RFID tag attached to the imaging target object to recognize the target object.

The action recognizing unit 83 extracts feature points from the captured image data obtained by the camera 21 and recognizes what kind of action the person is doing by tracking the extracted feature points (action recognition processing).

The state recognizing unit 84 recognizes a state of the user such as happy, sad, or busy states by analyzing motions of the eyes and eyebrows from the captured image data obtained by the camera 21, by analyzing the tone of the sound from the sound data obtained by the microphone 23, or by using both of these analysis results (state recognition processing). Further, the state recognizing unit 84 may recognize the contents of the user's utterance from the sound data obtained by the microphone 23, to thereby recognize the state of the user (state recognition processing).

The correlation extracting unit 85 extracts a correlation from the environment information recognized by each of the position recognizing unit 80, the person/animal recognizing unit 81, the object recognizing unit 82, the action recognizing unit 83, and the state recognizing unit 84.

The map updating unit 86 registers the environment information recognized by each of the person/animal recognizing unit 81, the object recognizing unit 82, the action recognizing unit 83, and the state recognizing unit 84 and the correlation information extracted by the correlation extracting unit 85 in the spatio-temporal map and updates the spatio-temporal map. The updated spatio-temporal map is stored in the storage unit 9.

The additional information determining unit 7 determines information to be added to the spatial-temporal map on the basis of the spatio-temporal map read from the storage unit 9. The determined information to be added is sent to the behavior control signal generating unit 11. The information to be added will be described later.

At a time soon after the start of use of the pet-type robot 1, the action control signal generating unit 11 generates a behavior control signal for the pet-type robot 1 to perform a behavior of searching in the house in order to generate a spatio-temporal map. Specifically, it autonomously moves and obtains various types of data to obtain environment information in all spatio-temporal regions.

Further, in order to obtain the information to be added determined by the additional information determining unit 7, the behavior control signal generating unit 11 generates a behavior control signal to cause the pet-type robot 1 to move and causes the data obtaining unit 2 to obtain data related to the surrounding environment information.

Further, when a certain amount of time elapses from the start of use and a certain amount of environment information and correlation information is stored in the spatio-temporal map, the behavior control signal generating unit 11 generates a behavior control signal for the pet-type robot 1 to perform a behavior of communicating with the user on the basis of the spatio-temporal map read from the storage unit 9.

In the present embodiment, since the pet-type robot principally used for communication with the user is shown as the example, the behavior control signal for the pet-type robot 1 is generated on the basis of the spatio-temporal map such that, for example, the pet-type robot 1 preferentially exists in a space or time zone with a high frequency of appearance of the user or a space or time zone in which there are many people.

Further, when the pet-type robot 1 moves and obtains data or communicates with the user, the behavior control signal generating unit 11 generates a behavior control signal in consideration of a surrounding situation determination result.

For example, the behavior control signal generating unit 11 generates a behavior control signal to control the movement range of the pet-type robot 1 in consideration of the battery capacity detection signal.

Further, the behavior control signal generating unit 11 generates a behavior control signal in consideration of user feed-back information.

Specifically, feed-back information including a state (facial expression and the like), utterance, and the like of the user when the pet-type robot 1 performs a behavior to exist in a time or location (space) in which the user appears at a high probability on the basis of the spatio-temporal map in order to communicate with the user is registered in the spatio-temporal map and the spatio-temporal map is updated. The behavior control signal generating unit 11 generates a behavior control signal on the basis of the spatio-temporal map in which the user feedback information has been registered. For example, the behavior performed on the basis of the self-space map before update is considered as inappropriate on the basis of the state of the user and a behavior control signal is generated not to perform the behavior.

### (Spatio-Temporal Map)

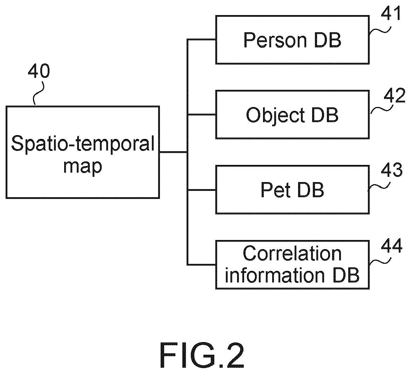

The spatio-temporal map will be described with reference to Figs. 2 to 14.

Fig. 2 shows databases that constitute the spatio-temporal map. As shown in Fig. 2, a spatio-temporal map 40 includes a plurality of databases (DBs). Those databases are, for example, a person DB 41, an object DB 42, a pet DB 43, a correlation information DB 44, and the like.

In the person DB 41, pieces of person information such as captured image data of a person, sound data of the person, gender, and date of birth are registered in association with each other.

In the object DB 42, information about an object in a work space in which the pet-type robot 1 operates is registered. Examples of the object include a stationary object which is not moved much by a user, such as a table, a sofa, a television, a bed, a desk, an oven range, and a refrigerator, and a movable object which is small enough to be held and moved by a user, such as a bag, an umbrella, a remote controller, a book, a kitchen knife, a pan, and a lunch box.

In the pet DB 43, pet information is registered.

In the correlation information DB 44, correlation information in which at least two of weather information, space information, time information, person information, person action information, person state information, object information, object state information, pet information, and pet state information are associated with each other is registered.

In the present embodiment, each database is constructed in the storage unit 9 of the pet-type robot 1, which is an information processing apparatus, but may be constructed in a server on the Internet.

In a case where the database is constructed on a cloud server, various types of data obtained by the data obtaining unit 2 is converted into privacy-excluded information such that the locations of the user and the house and the like cannot be identified and is sent to the cloud server.

In the cloud server, the object recognition processing, the state recognition processing, and the like may be updated using the privacy-excluded information. Here, the privacy-excluded information is, for example, information about the feature amount of the captured image data or the like.

The space information, the time information, the person information, the person action information, the person state information, the object information, the object state information, the pet information, and the pet state information are recognized by using various types of data obtained by the data obtaining unit 2.

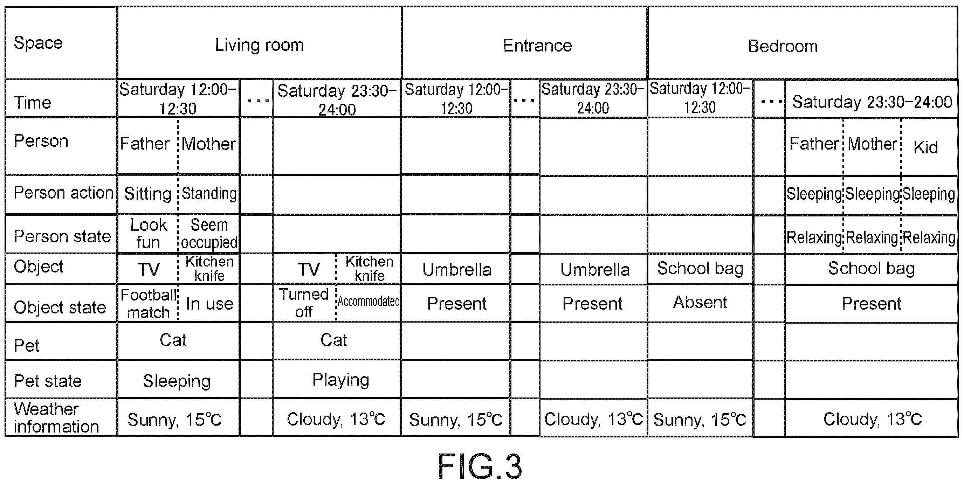

Fig. 3 shows a data structure example of the spatio-temporal map on one of Saturdays. Here, a case where Saturdays are holidays for the Father and the Mother while Saturdays are school attendance days for the Kid is shown.

Fig. 3 shows a portion of each state of the three spaces of the living room, the entrance, and the bedroom every 30 minutes for 24 hours. Fig. 3 shows environment information such as the information related to a person, the information related to an object, the information related to a pet, and the weather information for each location and for each time. The object information is associated with the person information.

For example, a map as shown in Fig. 3 is generated for each day of the week and environment information is stored for each day of the week. In this way, a spatio-temporal map that reflects individual lifestyles of the users, i.e., the Father, the Mother, and the Kid is generated, are, for example, for each day of the week.

In the example shown in Figure 3, between 12:00 and 12:00 on Saturday in the living room, the Mother seems occupied with a kitchen knife for lunch making, the Father is sitting and watching a football match on TV and looks fun, and the cat is sleeping. Since the Kid has gone to school, the Kid and the school bag do not exist in the house.

On the other hand, between 23:00 and 24:00 on Saturday in the bedroom, the Father, the Mother, and the Kid are relaxed and sleeping, no body exists in the entrance, and the cat is playing in the living room.

Further, in the example shown in Fig. 3, the weather is sunny and the umbrella exists in the entrance all day. Further, the school bag exists in the bedroom between at 23:30 and 24:00 on Saturday.

On the basis of such environment information stored in the spatio-temporal map, the existence probability of the user can be calculated for each location and for each time for example.

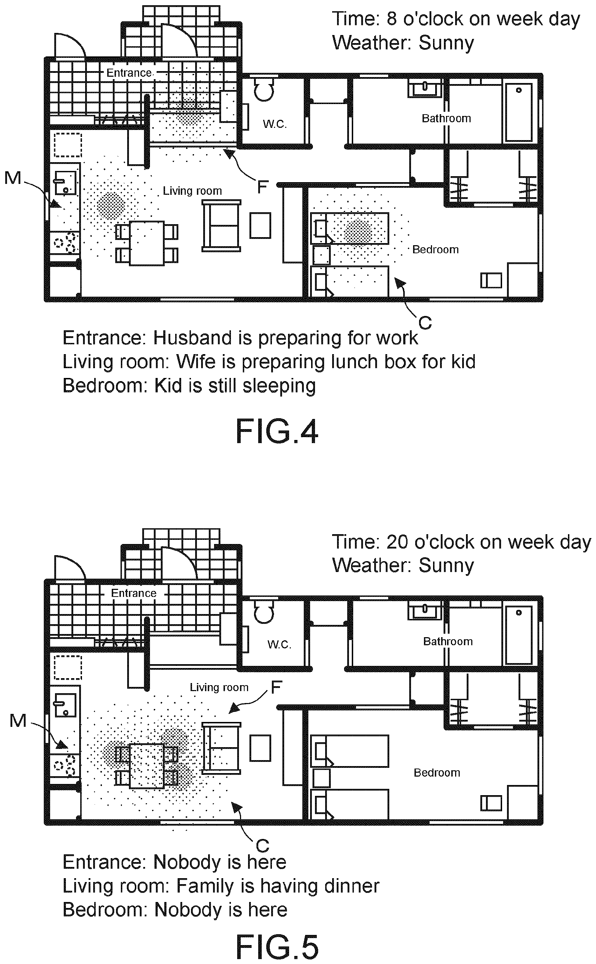

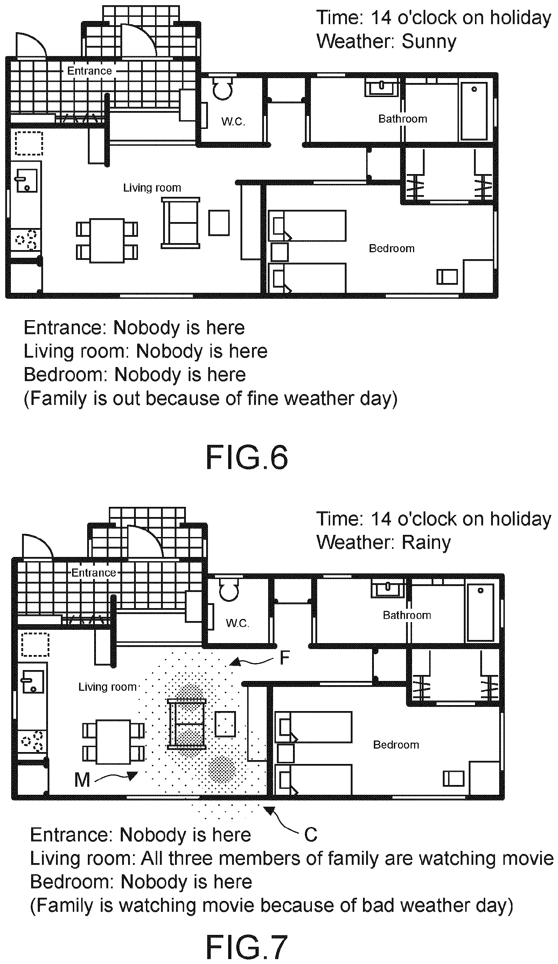

Figs. 4 to 7 each are an example of an existence probability distribution diagram in which the existence probability of the user in the house for each time and for each weather, which is calculated on the basis of the environment information stored in the spatio-temporal map, is visualized. Figs. 4 to 7 show the space information in layout diagrams of the house. Fig. 4 is a state at 8:00 on a week day and Fig. 5 is a state at 20:00 on the week day. Figs. 6 and 7 are states at 14:00 on a holiday. Fig. 6 shows a case where the weather is sunny and Fig. 7 shows a case where the weather is rainy.

In Figs. 4 to 7, a region where a person exists is shown as dots. A region F where the Father exists, a region M where the Mother exists, and a region C where the Kid exists indicate the existence probability of each person, and the higher the density of dots, the higher the existence probability of the person. The existence probability is calculated on the basis of the stored environment information, and the accuracy improves as the stored environment information increases.

Fig. 4 shows that at 8:00 on the week day, there is a high probability that the Father exists in the entrance preparing for work, the Mother exists in the living room preparing a lunch box, and the Kid exists in the bedroom while still sleeping. It should be noted that here, for the sake of convenience, the regions F, M, and C where the user exists are shown as the circular shapes.

Fig. 5 shows that there is a high probability that the Father, the Mother, and the Kid exist in the living room at 20:00 on the week day for having a dinner.

Fig. 6 shows that in a case where weather is sunny at 14:00 on the holiday, there is no one in the house because the weather is fine and the family is out.

Fig. 7 shows that in a case where weather is rainy at 14:00 on the holiday, there is a high probability that the Father, the Mother, and the Kid exist in the living room because the weather is bad and the family watches a movie.

It should be noted that a user may be able to view a diagram in which such person existence probability is visualized using a display device.

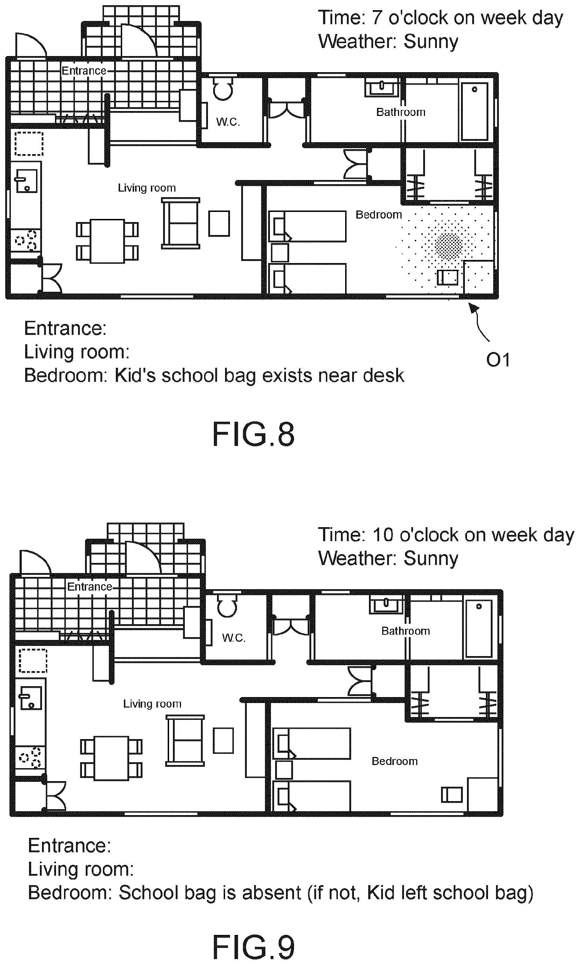

Figs. 8 to 11 are examples of the existence probability distribution diagrams obtained by visualizing the existence probability of an object which is one of user's belongings in the house by time and weather, which are calculated on the basis of the environment information stored in the spatio-temporal map. A school bag O1 of the Kid and an umbrella O2 of the Father are shown as examples of the objects which are user's belongings.

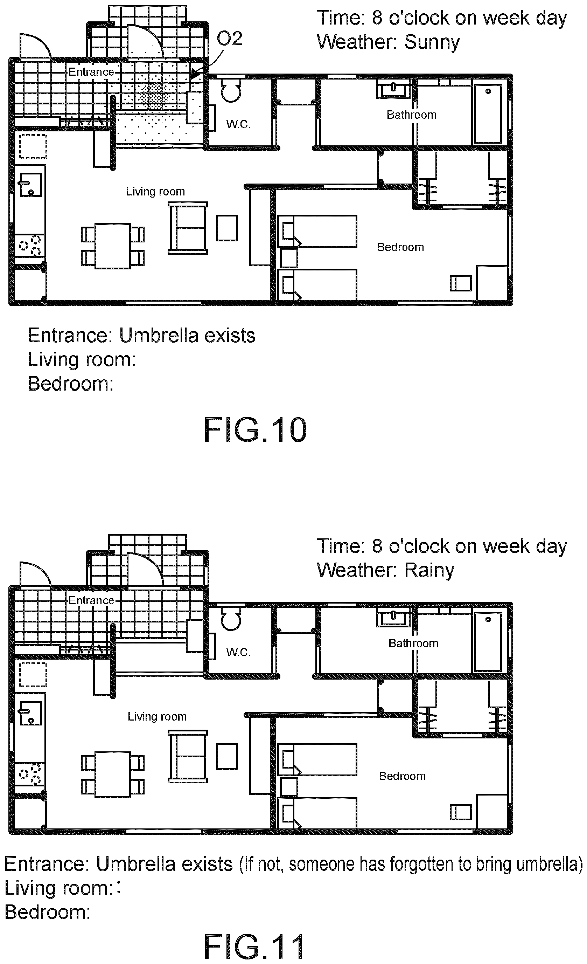

Fig. 8 is a state at 7:00 on week day and Fig. 9 is a state at 10:00 on week day. Figs. 10 and 11 are states at 8:00 on the week day. Fig. 10 shows a case where the weather is sunny and Fig. 11 shows a case where the weather is rainy. In the figure, a region where the Kid's school bag O1 exists and a region where the Father's umbrella O2 exists are shown as dots. Such object existence probability about the bag, the umbrella, or the like is also indicated by the density of dots as in the case of the person existence probability, and the higher the density of dots, the higher the existence probability of the object.

Fig. 8 shows that at 7:00 on the week day, since the Kid is still before going to school, there is a high possibility that the school bag O1 is placed in the bedroom.

Fig. 9 shows that at 10:00 on the week day, since the Kid has already gone to school, the school bag O1 does not exist in the house. For example, in a case where it is recognized on the basis of such a spatio-temporal map that the school bag O1 exists in the house at 10:00 on a week day, it is considered that the Kid left the school bag O1.

Fig. 10 shows that there is a high probability that the umbrella O2 exists in the entrance in a case where the weather is sunny at 8:00 on the week day. Fig. 11 shows that the umbrella O2 does not exist in the entrance in a case where the weather is rainy at 8:00 on the week day. For example, in a case where it is recognized on the basis of such a spatio-temporal map that the umbrella O2 exists in the entrance at 8:00 on the week day when the weather is rainy, it is considered that the Father left the umbrella.

Here, a relation between a person and the belongings of the person, i.e., a correlation between the person and the object, such as the "school bag of the Kid" and the "umbrella of the Father", can be obtained as follows, for example.

First, the umbrella is recognized by the object recognition processing on the basis of the data obtained by the data obtaining unit 2, and the umbrella (object information) is registered in the spatio-temporal map. Next, the Father is recognized by the person recognition processing and the Father (person information) is registered in the spatio-temporal map. Next, it is recognized that the Father is holding the umbrella by the action recognition processing, and the correlation between the umbrella and the Father is registered in the spatio-temporal map.

When such a series of recognition processing such as recognizing the umbrella, recognizing the Father, and recognizing that the Father is holding the umbrella is stored for a certain period, the correlation that the "umbrella" is one of belongings of the "Father" is obtained.

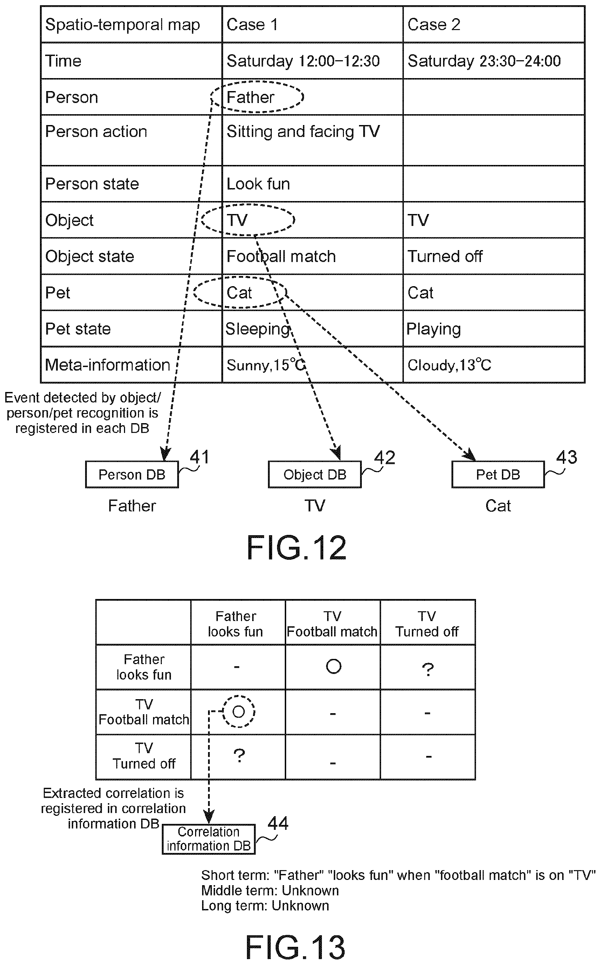

Fig. 12 shows a case of the living room extracted on the basis of the data structure of Fig. 3.

Case 1 is a case between 12:00 and 12:30 on Saturday, where the Father is sitting and watching TV and looks fun, the football match is on TV, the cat is sleeping, the weather outside the house is sunny, and the temperature is 15°C.

Case 2 is a case between 23:30 and 24:00 on Saturday, where no one exists in the living room, the TV is turned off, the cat is playing, the weather outside the house is sunny, and the temperature is 13°C.

The environment information recognized by the person/animal recognition and the object recognition is registered in the person DB 41, the object DB 42, and the pet DB 43, which are respectively corresponding databases.

Fig. 13 shows an example of extracting a correlation between the information related to a person and the information related to an object.

As shown in Fig. 13, by tabulating the correlation between the mutually linked person information and the person state information and the mutually linked object information and the object state information, the correlation that the "Father looks fun" when the "football match is on TV" is extracted.

For example, when the extracted correlation information is extracted in a short period, it is obtained as short-term correlation information and middle-term and long-term correlation information long term is unknown.

Further, when the extracted correlation information is extracted in a middle period longer than the short period, it is obtained as short-term and middle-term correlation information and the long-term correlation information is unknown.

Further, when the extracted correlation information is extracted in a long period longer than the middle period, it is obtained as short-term, middle-term, and long-term correlation information.

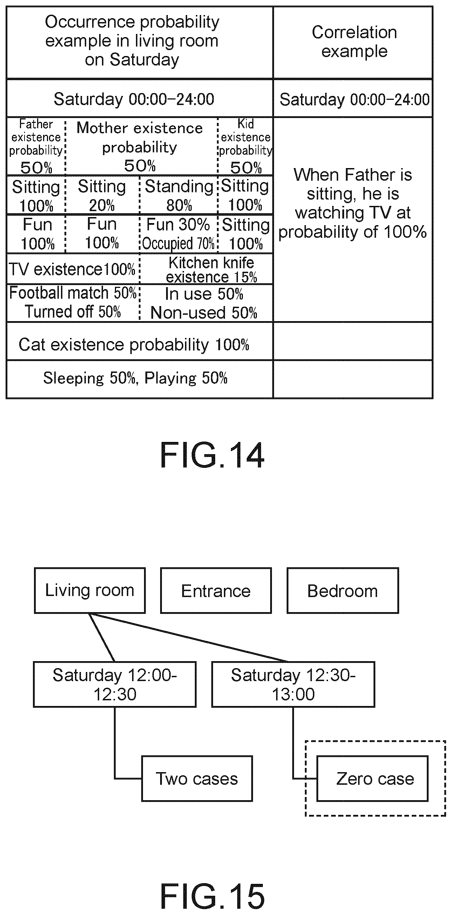

Fig. 14 is a diagram showing the existence probability of each of the persons, the objects, and the pet in the living room throughout Saturday and the occurrence probability example of the action or state of each of the persons, the objects, and the pet, which are calculated on the basis of the data structure of the spatio-temporal map of Fig. 3, and the correlation example extracted on the basis of it.

Fig. 14 shows that the Father, the Mother, and the Kid exist in the living room at a probability of 50% and the cat exists in the living room at a probability of 100% throughout Saturday. This means that the Father and the Kid are sitting at a probability of 100% when the Father and the Kid exist in the living room, the Mother is sitting at a probability of 20% and standing at a probability of 80% when the Mother exists in the living room.

Fig. 14 shows that the Father and the Kid are in a fun state at a probability of 100% when they are sitting, the Mother is in a fun state at a probability of 100% when she is sitting, and the Mother is in a fun state at a probability of 30% and in an occupied state at a probability of 70% when she is standing.

Fig. 14 shows that the TV exists at a probability of 100%. It shows that the kitchen knife exists at a probability of 15%, i.e., the kitchen knife is accommodated at a probability of 85%. It shows that the TV is turned on at a probability of 50% and turned off at a probability of 50% and the football match is on air when the TV is turned on.

As shown in Fig. 14, the correlation that the Father is watching the TV at a probability of 100% when the Father is sitting in the living room on Saturday is obtained on the basis of the occurrence probability of the action or the state of each of the persons, the objects, and the pet.

As described above, in the spatio-temporal map, a plurality of pieces of environment information related to the persons, the objects, the pet, or the like are stored for each location and for each time. In addition, various types of correlation information are obtained on the basis of those pieces of environment information, and the spatio-temporal map is updated. The behavior of the pet-type robot 1 is generated on the basis of the spatio-temporal map.

### (Behavior Example of Pet-Type Robot)

Next, a behavior example of the pet-type robot 1 which is performed on the basis of the behavior control signal will be described.

In the time soon after the start of use of the pet-type robot 1, the pet-type robot 1 does not perform behaviors other than the search for generating the spatio-temporal map. However, a spatial-temporal map that reflects the user's lifestyle pattern is generated by the pet-type robot 1 living with the user for several months, and thus the pet-type robot 1 performs behaviors to communicate with the user on the basis of this spatio-temporal map.

For example, in the initial stage of generating the spatio-temporal map shortly after the start of use of the pet-type robot 1, a small amount of environment information is registered in the spatio-temporal map, and there are many spatio-temporal regions having no cases or few cases. In order to fill such a spatio-temporal region the environment information of which is insufficient, the pet-type robot 1 moves to the spatio-temporal region the information of which is insufficient and then behaves to obtain data related to the surrounding environment information by the data obtaining unit 2.

Thus, in the initial stage of the start of use, the behaviors for generating the spatio-temporal map are performed in preference to behaviors to communicate with the user.

On the other hand, in a state in which a certain amount of time has elapsed from the start of use, a large amount of environment information is registered, and a certain number of cases are stored in the spatio-temporal map, the pet-type robot 1 performs behaviors to communicate with the user in preference to behaviors to move to obtain data in order to obtain the environment information.

In the present embodiment, since the pet-type robot 1 principally used for communication with a person is shown as an example, the pet-type robot 1 behaves to be located in a space or time zone with a high frequency of appearance of a user or a space or time zone in which there are many people.

For example, after several months, the pet-type robot 1 that has been searching through a house behaves to be located in a place with a high probability distribution of the person in the time zone, for example, the bedroom or entrance in the morning and the living room in the evening.

In the spatio-temporal map, the environment information is stored for each user.

When performing a behavior on a particular person, the pet-type robot 1 searches the spatio-temporal map on the basis of the day of the week, whether or not it is a holiday, and the same time domain as the time zone at that time with reference to the spatio-temporal map and calls the person existence probability distribution in the corresponding time domain.

In a case where the existence probability distribution has already been obtained with respect to the corresponding time domain, the pet-type robot 1 evaluates the person existence probability distribution and moves to search for the person in order from the place where the existence probability is highest. On the other hand, in a case where the existence probability distribution has not been obtained with respect to the corresponding time domain, the pet-type robot 1 searches to obtain the environment information in the time domain.

For example, the pet-type robot 1 plans and carries out a behavior of going to the entrance (for saying goodbye) at 8:00 on the week day on the basis of the correlation information that the probability that the Father is at the entrance at 8:00 on the week day is 90%. Further, the pet-type robot 1 performs a behavior of first searching for the Father in the living room having a high probability of existence at 14:00 on a rainy holiday on the basis of the correlation information that the probability that the Father exists in the living room at 14:00 on a rainy holiday is 80%.

The pet-type robot 1 is also capable of performing a behavior on a particular user on the basis of the correlation information in which the time information, the information related to an object, and the information related to a person are associated with each other with reference to the spatio-temporal map.

For example, it is assumed that the pet-type robot 1 has the correlation information that the probability that the wallet owned by the Father exists in the house at 9:00 on the week day is 3%. In a case where the pet-type robot 1 recognizes that the Father's wallet exists in the house at 9:00 on the week day by object recognition, the pet-type robot 1 considers on the basis of the correlation information that the pet-type robot 1 has that the Father left the wallet and sends a notification to a portable phone of the Father that the Father may leave the wallet.

Further, the pet-type robot 1 is also capable of performing a behavior of notifying the user on the basis of the correlation information in which the weather information, the information related to an object, and the information related to a person are associated with each other.

For example, it is assumed that the pet-type robot 1 has the correlation information that the probability that the Father has an umbrella on a rainy day is 95%. In a case where the pet-type robot 1 recognizes that the Father who intends to go out does not have the umbrella on a rainy day, on the basis of the correlation information it had, the pet-type robot 1 performs a behavior of notifying the Father not to leave the umbrella.

Further, the pet-type robot 1 is also capable of performing a behavior of notifying the user on the basis of the correlation information in which the time information, the information related to an object, and the information related to a pet.

For example, it is assumed that the pet-type robot 1 has the correlation information that the probability that cat food is in a tray for the cat at 8:00 is 95%. In a case where the pet-type robot 1 detects a state in which there is no cat food in the tray at 8:00 by object recognition, the pet-type robot 1 considers that cat food is needed and performs a behavior of notifying the user of this.

Further, the pet-type robot 1 is also capable of performing a behavior of notifying the user on the basis of the correlation information in which the space information and the information related to an object are associated with each other.

For example, it is assumed that the pet-type robot 1 has the correlation information that the probability that a roll of toilet paper in stock exists in the W.C. is 95%. In a case where the pet-type robot 1 recognizes a state in which there are no rolls of toilet paper in the W.C. by object recognition, the pet-type robot 1 considers that a roll of toilet paper is needed and performs a behavior of notifying the user of this.

Further, the pet-type robot 1 is also capable of performing a behavior of notifying the user on the basis of the correlation information in which the space information and the information related to a person are associated with each other.

For example, it is assumed that the pet-type robot 1 does not have the correlation information that a person is sleeping at the entrance. In a case where the pet-type robot 1 recognizes a situation where the Mother is sleeping at the entrance by position recognition, person recognition, and action recognition, the pet-type robot 1 considers this situation as being abnormal and performs of a behavior of notifying or reporting to other users. In this manner, abnormality detection may be performed using the spatio-temporal map.

For the notification of the abnormal situation, the pet-type robot 1 may directly notify the other users in the house of the abnormal situation or may also be configured to send a notification to portable terminals or the like of the other users. Further, for example, the pet-type robot 1 may be configured to reporting it to a company that provides a home security service registered in advance.

Further, in response to an instruction from the user, the pet-type robot 1 is also capable of performing a behavior according to the user instruction on the basis of the correlation information in which the space information and the object information are associated with each other.

For example, in a case where a search instruction from the user that "Search for the TV remote controller" is made, the pet-type robot 1 performs a behavior of starting the search of the remote controller from the place where the existence probability of the TV remote controller is highest on the basis of the spatio-temporal map. Then, when the pet-type robot 1 recognizes the remote controller, the pet-type robot 1 performs a behavior of returning to the user by holding the remote controller.

Here, although the instruction to search for the object is shown as an example, the instruction may be an instruction to search for a person and the pet-type robot 1 may perform a behavior of calling attention to the person to be searched by barking or the like and informing the person to be searched of the fact that the other user is searching for the person.

Further, when the pet-type robot 1 moves and obtain data in order to generate the spatio-temporal map or performs a behavior for the user on the basis of the spatio-temporal map, it may perform a behavior that takes into account a situation determination result regarding a situation of the battery charge, a situation of contamination of an infrared camera, or the like. The details will be described later.

Further, a configuration in which the space information, the time information, the information related to an object, and the information related to a person, which are dangerous to the pet-type robot 1, are stored in the temporal-spatial map may be employed.

Based on this spatio-temporal map, the pet-type robot 1 performs, for example, a behavior not to approach a bathroom or a gas stove where water or fire that may cause a failure of the pet-type robot 1 exists and a place where a heater or the like that appears in a seasonal limitation is fixed. The bathroom, the gas stove, the stove, and the like can be detected by the object recognition processing and are registered in the spatio-temporal map as initial information.

Further, as another example, in a case where the pet-type robot 1 recognizes a situation where a person is equipped with a virtual reality (VR) headset, the pet-type robot 1 considers it as a dangerous situation for the pet-type robot 1 and performs a behavior not to approach the person.

It should be noted that the situation where the person is equipped with the VR headset is a situation where the person is playing a game and cannot see the surrounding situation and it is difficult to predict what kind of motion the person will make. Therefore, as there is a possibility that the pet-type robot 1 is broken by the motion of the person, it is regarded as a dangerous situation for the pet-type robot 1.

Further, it may be possible to obtain information about dangerous objects and dangerous places and register the information in the spatio-temporal map by teaching "Don't approach this object (or this place) because it is dangerous" or the like from the user. Based on this, the pet-type robot 1 performs a behavior not to approach the dangerous object or the dangerous place.

### (Determination Method for Information to Be Added in Spatio-Temporal Map Generation)

In the present embodiment, in the spatio-temporal map generation, information to be added is determined and the pet-type robot 1 is configured to be capable of autonomously moving and obtaining data on the basis of this determination result.

The information to be added is information about a spatio-temporal region which indicates that the environment information is insufficient, for example, there are no cases or few cases in a spatio-temporal region of a particular time zone on a particular day of the week in a particular place. The additional information determining unit 7 determines, as the information to be added, "environment information of a spatio-temporal region the information of which is insufficient (e.g., a space-time region of 12:30 to 13:00 on Saturday in the living room)".

In the initial stage of generating the spatio-temporal map, the spatio-temporal region the environment information of which is insufficient such as no or few cases exists. The additional information determining unit 7 determines, as the information to be added, the environment information of such a spatio-temporal region the environment information of which is insufficient.

Fig. 15 shows a detection example of the spatio-temporal region the information of which is insufficient. The additional information determining unit 7 searches the spatio-temporal map to detect the spatio-temporal region of 12:30 to 13:00 on Saturday in the living room with no cases. The additional information determining unit 7 determines the environment information of such a spatio-temporal region the information of which is insufficient as the information to be added.

Further, the information to be added may be a spatio-temporal region according to the weather information, the information of which is insufficient. For example, when the environment information at 12:30 to 13:00 on a rainy Saturday in the living room is insufficient, the additional information determining unit 7 determines the environment information at 12:30 to 13:00 on the rainy Saturday in the living room as the information to be added.

In a state in which a certain number of cases are stored in the spatio-temporal map for a while from the start of spatio-temporal map generation, prioritization of times and spaces in which the pet-type robot 1 moves is performed in accordance with the characteristics and the pet-type robot 1 moves in accordance with it.

For example, since the pet-type robot 1 according to the present embodiment has the characteristic that it is principally used for communication with the user, the pet-type robot 1 behaves to be located in a space or time zone with a high frequency of appearance of a person or a space or time zone in which there are many people.

Further, the information to be added may be information about the spatio-temporal map after a certain period has elapsed from the start of use. The spatio-temporal map that reflects, to some extent, the lifestyle of the user on each day of the week is generated in about two months after the start of generation of the spatio-temporal map, for example. Therefore, in order to update the spatio-temporal map, it becomes unnecessary to actively move the pet-type robot 1 and obtain data related to the surrounding environment information as compared with the initial stage of the start of use.

In such a case, the additional information determining unit 7 determines new environment information in all the spatio-temporal regions as the information to be added such that the pet-type robot 1 is newly moved actively to obtain data related to the surrounding environment information after a certain period has elapsed from the start of use, for example, every three months from the start of use. At this time, the additional information determining unit 7 determines that it is unnecessary to obtain data in the time zone in which the user is sleeping from the previously stored case and the additional information determining unit 7 does not need to determine the environment information in the time zone in which the user is sleeping as the information to be added.

By storing environment information of a plurality of terms, each of which is every three months, as described above, it is possible to generate a spatio-temporal map that reflects the lifestyle of the user for each of seasons such as spring, summer, fall, and winter, for example. In addition, by storing information for several years, it is possible to generate a spatial-temporal map that reflects the lifestyle of the user on a yearly basis.

For example, since the Kid is mostly in the house from late March to early April as the spring vacation, the probability of the Kid staying in the house varies between the school attendance period and the spring vacation period. By storing information for several years, it becomes possible to estimate the approximate period in which the kid stays in the house without going to school during the spring vacation in one year and it is possible to cause the pet-type robot 1 to perform behaviors according to the situation. For example, during the school attendance period, the pet-type robot 1 was welcoming at the entrance in a time zone when the Kid came back from the school, but behaviors are controlled not to welcome the Kid at the entrance during the spring vacation.

Further, the information to be added may be environment information under the same environment condition as the environment condition at the time when a user reaction is bad as a result of the movement of the pet-type robot 1 on the basis of the spatio-temporal map. By storing a plurality of pieces of information under the environmental condition in which the reaction is bad, it is possible to find out some kind of correlation with the case where the reaction is bad, and the pet-type robot 1 is capable of performing a behavior more appropriate for the user on the basis of it. The details will be described later in a generation method for the spatio-temporal map.

### (Generation Method for Spatio-Temporal Map)

The pet-type robot 1 determines information to be added, moves to obtain the information to be added, obtains data related to surrounding environment information, and updates the spatio-temporal map such that the spatio-temporal map can be improved and more appropriate communication with the user can be achieved.

Further, the pet-type robot 1 registers feed-back information generated as a result of the behavior based on the spatio-temporal map in the spatio-temporal map and updates the spatio-temporal map.

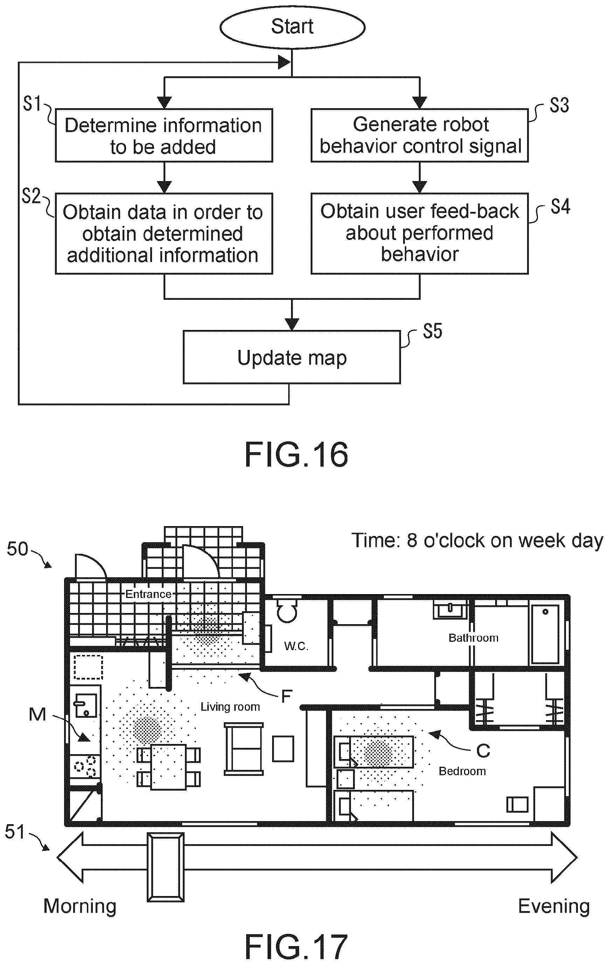

Fig. 16 is a flowchart of the generation method for the spatio-temporal map. In Fig. 16, Steps S1, S2, and S5 represent a flow of determining information to be added and updating the spatio-temporal map. Steps S3, S4, and S5 represent a flow of registering feed-back information generated as a result of the behavior of the pet-type robot 1 based on the spatio-temporal map in the spatio-temporal map and updating the spatio-temporal map.

In either flow, a situation when obtaining information may be determined and a behavior control signal may be generated in consideration of the situation determination. The situation set forth herein is, for example, battery charge, a situation of an infrared camera, a situation of a person in a case where there is an instruction from the user, or the like.

For example, when the pet-type robot 1 moves to obtain various types of data, the behavior range of the pet-type robot 1 may be controlled in consideration of the situation determination result of the battery charge. In a case where it is determined that it is a situation where the battery capacity is sufficient, the behavior control signal generating unit 11 generates a behavior control signal to search to a distant position when the pet-type robot 1 autonomously moves to obtain various types of data. On the other hand, in a case where it is determined it is a situation where the battery capacity is insufficient, a behavior control signal is generated to perform search in a range in which the movement distance is short when the pet-type robot 1 autonomously moves to obtain various types of data.

Further, in a case where the pet-type robot 1 is provided with an infrared camera to be capable of imaging at night, the behavior range of the pet-type robot 1 may be controlled in consideration of the situation determination result of contamination of the infrared camera. In a case where it is determined that it is a situation where the infrared camera is contaminated with dirt or water droplets adhering to an optical system such as a lens of the infrared camera, a behavior control signal is generated such that the pet-type robot 1 does not move at night until it is cleaned when the pet-type robot 1 autonomously moves to obtain various types of data. Determination of deposits such as dirt of the infrared camera can be performed by providing a sensor that monitors the deposits.

Further, in a situation where there is an instruction from the user when the pet-type robot 1 moves to obtain various types of data, a behavior control signal for the pet-type robot 1 is generated also in consideration of the instruction contents. Examples of the situation include a search instruction of the remote controller from the user and the like.

Further, the situation of the person is a behavior situation of the person, for example, sleeping of the person or studying of the person. The pet-type robot 1 determines that it is not good to be in the vicinity of the person in such a situation as sleeping or studying, and performs a behavior not go to the vicinity of the person when the person is sleeping or studying in consideration of this situation determination result.

Although the generation method for the spatio-temporal map will be described with reference to Fig. 16 hereinafter, a case where the situation determination result as described above is not taken into consideration will be described as an example for the sake of easy understanding.

As shown in Fig. 16, the pet-type robot 1 determines information to be added on the basis of the spatio-temporal map (S1), and it moves to obtain the information to be added and obtains data related to surrounding environment information by the data obtaining unit 2 (S2).

In a case where the information to be added is the environment information of the spatio-temporal region the information of which is insufficient, the pet-type robot 1 autonomously moves to the spatio-temporal region the information of which is insufficient in S2 and obtains the data. For example, in a case where the environment information at the entrance at 8:00 on the week day is insufficient, the pet-type robot 1 performs a behavior of going to the entrance at 8:00 on the week day to obtain data for a certain period.

Further, in a case where the information to be added is environment information of all the spatio-temporal regions after a certain period has elapsed from the start of generation of the spatio-temporal map, in S2, the pet-type robot 1 autonomously moves to all the spatio-temporal regions and obtains the data. It should be noted that after a certain period of time has elapsed from the start of use of the pet-type robot 1, the control may be performed not to actively obtain information in the time region of the time zone in which the user is sleeping in the spatio-temporal map generated so far.

As shown in Fig. 16, the pet-type robot 1 generates a behavior control signal on the basis of the spatio-temporal map (S3) and performs a behavior on the basis of the behavior control signal. The pet-type robot 1 obtains, as the user feed-back information, a reaction such as the state or utterance of the user when the pet-type robot 1 performs the behavior (S4).

For example, on the basis of the correlation information registered in the spatio-temporal map that the probability that the Father is at the entrance between 20:00 and 20:30 on the week day is 95%, the pet-type robot 1 plans and performs a behavior of going to the entrance between 20:00 and 20:30 on the week day in order to welcome the Father (S3). The pet-type robot 1 obtains a reaction of the Father when the pet-type robot 1 welcomes the Father as the user feed-back information (S4).

The pet-type robot 1 performs person recognition, sound recognition, and state recognition on the basis of the various types of data obtained by the data obtaining unit 2, and obtains a reaction (state of the Father) in which the Father looks happy as the user feed-back information. The pet-type robot 1 considers the behavior of welcoming the Father at the entrance from this reaction of the Father to be good, and the pet-type robot 1 repeats the behavior of welcoming the Father.

Further, as another example, on the basis of the spatio-temporal map generated so far, the pet-type robot 1 plans and performs a behavior of going to the bathroom in a time zone in which the Mother frequently appears (S3). The pet-type robot 1 obtains, as the user feed-back information, a reaction in which the Mother preparing to take a bath has a confused facial expression (S4).

Based on the reaction (state of the Mother) in which the Mother has the confused facial expression, the pet-type robot 1 considers the behavior of being in the bathroom when the Mother is preparing to take a bath to be not good, and performs a behavior not to approach the bathroom when the Mother is preparing to take a bath and the behavior not to go to the bathroom in a time zone when the Mother exists in the bathroom at a high probability.

In order to store such feed-back information, environment information under similar environment conditions may be determined as the information to be added (S1) and data may be obtained to obtain the environment information under the similar environmental conditions (S2).

For example, it is assumed that the pet-type robot 1 plans a behavior of going to the bathroom in a time zone in which the Mother frequently appears in the bathroom in order to communicate with the Mother, and extracts, when performing it, the correlation information that the Mother looks happy when "Mother" is "doing the laundry" in the "bathroom" and the correlation information that the Mother looks confused when the "Mother" is "preparing to take a bath" in the "bathroom" (because the pet-type robot 1 is there).

In a case where, by performing the behavior multiple times, such different state information such as "looking happy" and "looking confused" is obtained, the environment information under the environment condition that the "Mother" exists in the "bathroom" is determined as the information to be added (S1). Then, in order to obtain environment information under the environment condition that the "Mother" exists in the "bathroom", the pet-type robot 1 moves to the bathroom when the Mother exists in the bathroom and obtains various types of data (S2).

Then, it is assumed that by storing a plurality of cases under the similar environment conditions, the correlation information that the Mother "looks happy" when the Mother is "doing the laundry" and the correlation information that the mother "looks confused" when the mother is "preparing to take a bath" are obtained under the environment condition that the "Mother" exists in the "bathroom".

Based on this correlation information, the pet-type robot 1 performs a behavior not to stay in the bathroom when the Mother is "preparing to take a bath", which would make the Mother confused. On the other hand, the pet-type robot 1 performs a behavior of staying near the Mother when the "Mother" is "doing the laundry".

In this manner, the pet-type robot 1 is capable of performing a behavior more appropriate for the user by storing a plurality of pieces of correlation information in which the actions of the Mother (doing the laundry, preparing to take a bath, etc.) and the states of the Mother (happy, confused, etc.) are associated with each other under the same environment condition that the person "Mother" exists in the location "bathroom".

The pet-type robot 1 generates and updates a spatio-temporal map on the basis of the user feed-back information obtained in S4 and the data obtained in S2 (S5) .

Thus, in the autonomous behavior robot control system 30, a spatio-temporal map, which is a spatial map that varies over time, is generated.

It should be noted that although in the present embodiment, the example in which the pet-type robot 1 obtains the space information such as the layout of the house, the person information, and the pet information by searching the house has been shown, a configuration in which the space information such as the layout of the house, the person information such as a photograph of the person, and the pet information such as a photograph of the pet are registered in advance in initial setting at the start of use of the pet-type robot 1 may be employed.

### (Display Example)

The information about the spatio-temporal map generated by the pet-type robot 1 may be visualized such that the user can confirm the information, and for example, the user can confirm the information from a display device including a display unit such as a portable terminal and a personal computer.

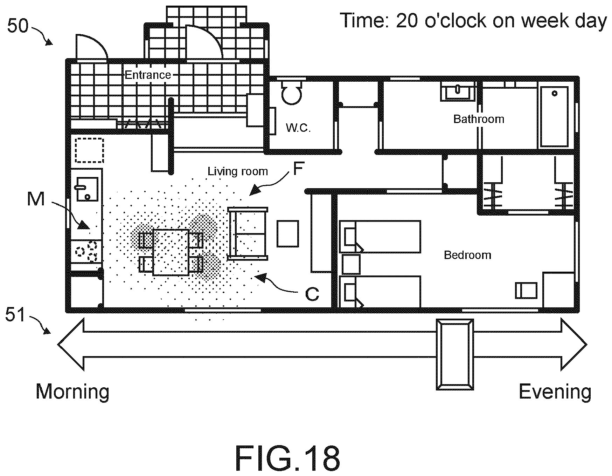

Figs. 17 and 18 are display examples of a probability distribution of the persons in the house on the week day. A region where the person may exist is shown as dots and the higher the density of the dots, the higher the existence probability. Regions where the person exists are displayed in a color-coded manner for each person.

In the examples shown in Figs. 17 and 18, a time domain slider 51 is displayed below a floor plan 50 which is the space information of the house. Fig. 17 shows a state at 8:00 (at 8:00 A.M.) and Fig. 18 shows a state at 20:00 (at 8:00 P.M.). By moving the time domain slider 51 to the left or right, it is possible to set the time and the user can grasp the existence probability of the person for each time.

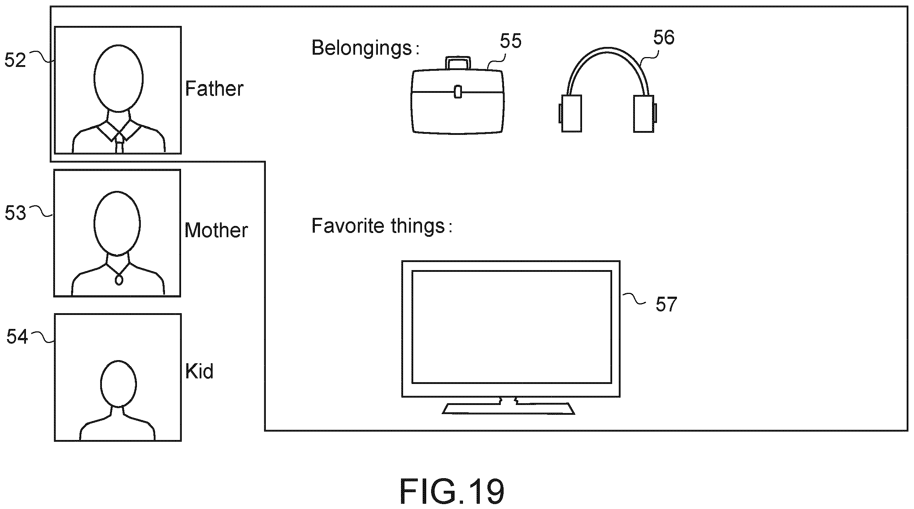

Further, the user may be enabled to confirm correlation information about a correlation between the person and the object through the display device. Fig. 19 is a display example showing the correlation information about the correlation between the person and the object.

As shown in Fig. 19, icons 52 to 54 of persons autonomously learned by the pet-type robot 1 are displayed. The icon 52 indicates the Father, the icon 53 indicates the Mother, and the icon 54 indicates the Kid. The person's icon may be a photograph of the person as shown in the figure or may be an icon that reflects attribute information such as age and gender.

When an icon indicating a person is tapped and selected by the user, object information related to the person is displayed. For example, objects that the person wears, carries, or owns, such as clothes, a headphones, bags, a bed, and the like, objects that the person often uses, such as a sofa and a TV, are displayed.

In the example shown in Fig. 19, when the Father's icon 52 is selected, photographs of a commuting bag 55 and a headphone 56, which are the belongings of the Father, television 57 and the like, which are favorite things of the Father, are displayed.

Further, the user may be enabled to confirm the contents of the autonomous behavior planned by the pet-type robot 1 on the basis of the spatio-temporal map on the display device. In addition, the user may be enabled to change the contents of the planned autonomous behavior while viewing the display unit and may be also enabled to delete the item. Further, the user may newly generate and register the contents of the behavior or the pet-type robot 1 may perform the behavior on the basis of the contents of the behavior created by the user.

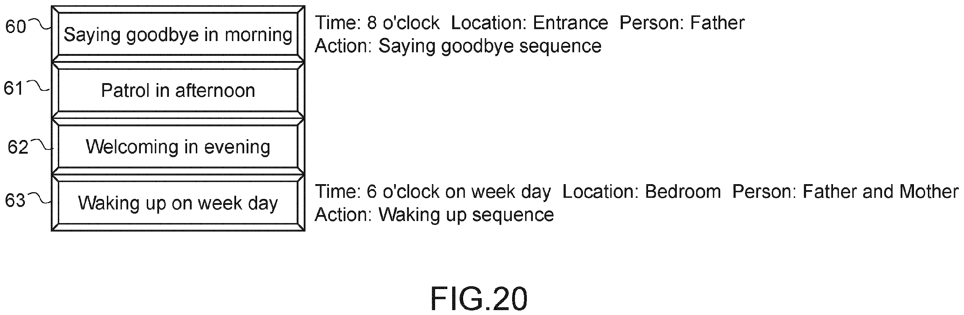

Fig. 20 is a display example of a list of behaviors autonomously planned by the pet-type robot 1 displayed on the display device.

In the example shown in Fig. 20, four items of "Saying goodbye in morning", "Patrol in afternoon", "Welcoming in evening", and "Waking up on week day" are displayed as the contents of the autonomous behavior. By tapping and selecting these items, detailed information about the behavior is displayed on the right-hand side of the item.

For example, by tapping and selecting the item "Saying goodbye in morning", the detailed information "time: 8:00, location: entrance, person: Father, behavior: Saying goodbye sequence" is displayed on the right hand side of "Saying goodbye in morning". Further, by tapping and selecting the item "Waking up on week day", "time: 6:00 on week day, location: bedroom, person: Father, Mother, behavior: waking up sequence" is displayed as detailed information.

### <Second Embodiment>

Although in the first embodiment, the map generating unit, the behavior control signal generating unit, and the additional information determining unit that are associated with generation of the behavior control signal for the autonomous behavior robot are provided in the autonomous behavior robot, they may be provided in a cloud server as an information processing apparatus capable of communicating with the autonomous behavior robot.

Further, although the example in which the single autonomous behavior robot are provided has been described in the first embodiment, a plurality of autonomous behavior robots may be provided.

In the present embodiment, an autonomous behavior robot control system in which two pet-type robots are used as autonomous behavior robots and the map generating unit, the behavior control signal generating unit, and the additional information determining unit that are associated with generation of the behavior control signal of each autonomous behavior robot are provided in a cloud server will be described as an example. Configurations similar to those of the above-described embodiment will be denoted by the same reference signs and descriptions thereof will be omitted in some cases.

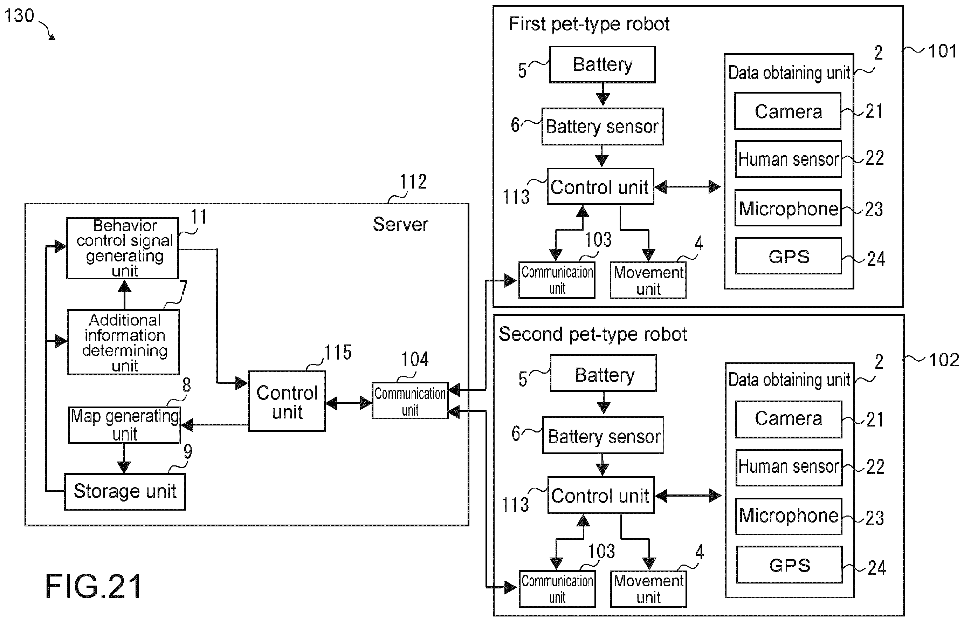

Fig. 21 is a diagram describing an autonomous behavior robot control system 130 according to the present embodiment and is a block diagram showing a configuration of a server 112, a first pet-type robot 101, and a second pet-type robot 102 as information processing apparatuses. In Fig. 21, the map generating unit 8 has a configuration of similar to the map generating unit 8 according to the first embodiment and a detailed illustration thereof is omitted.

### (Schematic Configuration of Autonomous Behavior Robot Control System)

As shown in Fig. 21, the autonomous behavior robot control system 130 includes the first pet-type robot 101 as a first autonomous behavior robot and the second pet-type robot 102 as a second autonomous behavior robot, and the server 112.

### (Configuration of Pet-Type Robot)

The first pet-type robot 101 and the second pet-type robot 102 are different robots and have a similar configuration. The first pet-type robot 101 and the second pet-type robot 102 each include a communication unit 103, a control unit 113, a movement unit 4, a battery 5, a battery sensor 6, and a data obtaining unit 2.

The communication unit 103 receives a behavior control signal for the pet-type robot from the server 112 and sends the received behavior control signal to the control unit 113. Further, the communication unit 103 receives, from the control unit 113, various types of data obtained by the data obtaining unit and a battery capacity detection signal obtained from the battery sensor 6 and sends the received various types of data and battery capacity detection signal to the server 112.

On the basis of the behavior control signal received from the server 112 via the communication unit 103, the control unit 113 causes the movement unit 4 to move each of the pet-type robots 101 and 102 and causes the data obtaining unit 2 to obtain data. Further, the control unit 113 sends various types of data obtained by the data obtaining unit 2 to the server 112 via the communication unit 103.

Further, the control unit 113 sends the battery capacity detection signal to the communication unit 103.

### (Configuration of Server)

The server 112 includes a communication unit 104, a control unit 115, a behavior control signal generating unit 11, an additional information determining unit 7, a map generating unit 8, and a storage unit 9.

The communication unit 104 communicates with the first pet-type robot 101, the second pet-type robot 102, and a server (not shown) that provides time information and weather information. The communication unit 104 connects to the server (not shown), obtains the time information and the weather information, and sends the obtained time information and weather information the control unit 115.

The communication unit 104 receives the various types of data obtained by the data obtaining unit 2 and the battery capacity detection signal with respect to each of the first pet-type robot 101 and the second pet-type robot 102 and sends the obtained various types of data and battery capacity detection signal to the control unit 115.

The communication unit 104 sends the behavior control signals for the first pet-type robot 101 and the second pet-type robot 102, which have been generated by the behavior control signal generating unit 11, to each of the first pet-type robot 101 and the second pet-type robot 102.

The control unit 115 sends various types of data, the time information and the weather information, the battery capacity detection signal, which have been received from the communication unit 104, to the map generating unit 8. The control unit 115 sends the behavior control signal received from the behavior control signal generating unit 11 to each of the first pet-type robot 101 and the second pet-type robot 102 via the communication unit 104.

The behavior control signal generating unit 11 generates the behavior control signal as in the first embodiment. The behavior control signals for the first pet-type robot 101 and the second pet-type robot 102 are generated by using the same spatio-temporal map. The behavior control signal for the first pet-type robot 101 and the behavior control signal for the second pet-type robot 102 are generated with different signal contents or the same signal contents.

For example, when the pet-type robots 101 and 102 obtains various types of data in order to obtain the information to be added for generating the spatio-temporal map, the two pet-type robots 101 and 102 may be controlled not to move to the same spatio-temporal region.

That is, while the one pet-type robot is searching a certain spatio-temporal region, the other pet-type robot may be controlled to search another spatio-temporal region. Accordingly, a spatio-temporal maps with enriched environment information can be more quickly generated, which is efficient.

Further, for example, when performing behaviors on the user on the basis of the spatio-temporal map, the behaviors can be controlled such that the pet-type robots 101 and 102 are respectively located at two different places at the same time. Accordingly, it is possible to perform behaviors for users respectively located at two different places at the same time, which can increase user satisfaction.

In this manner, the plurality of pet-type robots 101 and 102 may share information and the spatio-temporal map may be generated and updated on the basis of the data obtained by each of the plurality of pet-type robots 101 and 102. Further, the same spatio-temporal map may be used to generate the behavior control signals for the pet-type robots 101 and 102.

### <Third Embodiment>

In the present embodiment, an example in which a single pet-type robot 1 and a single cleaning robot are used as autonomous behavior robots and the map generating unit, the behavior control signal generating unit, and the additional information determining unit associated with generation of the behavior control signal of the autonomous behavior robot are provided in a cloud server will be described. Configurations similar to those of the above-described embodiments will be denoted by the same reference signs and descriptions thereof will be omitted in some cases.

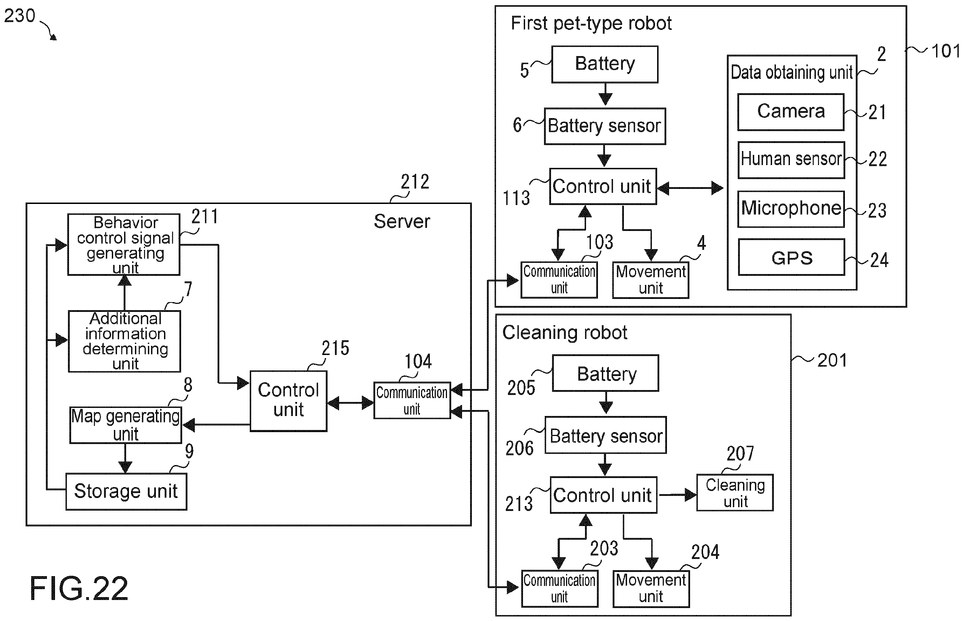

Fig. 22 is a diagram describing an autonomous behavior robot control system 230 according to the present embodiment and is a block diagram showing a configuration of a server 212, a first pet-type robot 101, and a cleaning robot 201 as information processing apparatuses. In Fig. 22, the map generating unit 8 has a configuration similar to that of the map generating unit 8 according to the first embodiment and a detailed illustration thereof is omitted.

### (Schematic Configuration of Autonomous Behavior Robot Control System)

As shown in Fig. 22, the autonomous behavior robot control system 230 includes the first pet-type robot 101 as the first autonomous behavior robot, the cleaning robot 201 as the second autonomous behavior robot, and the server 212.

### (Configuration of Cleaning Robot)

The cleaning robot 201 includes a communication unit 203, a control unit 213, a movement unit 204, a battery 205, a battery sensor 206, and a cleaning unit 207.

The communication unit 203 receives a behavior control signal from the server 212 and sends the received behavior control signal to the control unit 213. Further, the communication unit 203 receives a battery capacity detection signal from the control unit 213 and sends the received battery capacity detection signal to the server 212.

The movement unit 204 moves the location of the cleaning robot 201. The movement unit 204 is controlled by the control unit 213 on the basis of the behavior control signal generated by the behavior control signal generating unit 11.

The battery 205 supplies the power supply to the cleaning robot 201.

The battery sensor 206 detects battery charge of the battery 205. The battery sensor 206 sends the battery capacity detection signal as a detection result to the control unit 213.

The cleaning unit 207 includes a brush, a suction pump, and the like.

On the basis of the behavior control signal received from the server 212 via the communication unit 203, the control unit 213 causes the movement unit 204 to move the cleaning robot 201 and performs driving control on the brush and the suction pump in the cleaning unit 207 to cause the cleaning robot 201 to perform cleaning work.

Further, the control unit 213 receives the battery capacity detection signal and sends the received battery capacity detection signal to the communication unit 203.

### (Configuration of Server)

The server 212 includes a communication unit 104, a control unit 215, a behavior control signal generating unit 211, an additional information determining unit 7, a map generating unit 8, and a storage unit 9.

The control unit 215 sends various types of data, the time information and the weather information, and the battery capacity detection signal, which have been obtained by the data obtaining unit 2 and received from the communication unit 104, to the map generating unit 8. The control unit 215 sends the behavior control signal received from the behavior control signal generating unit 211 to the first pet-type robot 101 and the cleaning robot 201 via the communication unit 104.

The behavior control signal generating unit 211 generates a behavior control signal for the autonomous behavior robot as in the first embodiment. Respective behavior control signals for the first pet-type robot 101 and the cleaning robot 201 are separately generated on the basis of the same spatio-temporal map.

For example, when the first pet-type robot 101 and the cleaning robot 201 respectively autonomously perform behaviors on the basis of the spatio-temporal map, prioritization of times and spaces for the behaviors are performed in accordance with the characteristics of the robot and the first pet-type robot 101 and the cleaning robot 201 are moved accordingly.

Since the first pet-type robot 101 has the characteristic that it is principally used for communication with the user, the behavior control signals are generated such that the first pet-type robot 101 is preferentially located in time and space with a high frequency of appearance of a person and in which there are many people.

On the other hand, since the cleaning robot 201 is principally used for efficiently performing the cleaning work, the behavior control signal is generated to be preferentially located in space and time in which no one exists.

For example, in a case where the first pet-type robot 101 and the cleaning robot 201 are started to be used at substantially the same timing, the cleaning robot 201 performs cleaning in the house at a uniform frequency shortly after the start of use.

However, when a certain period elapses from the start of use and the spatio-temporal map generated using the first pet-type robot 101 is improved, the cleaning robot 201 intensively performs cleaning in a time zone in which the user exists in the house, such as the daytime on the week day.

In this manner, the behavior control signals of the plurality of autonomous behavior robots whose characteristics are different from each other may be generated by using the same spatio-temporal map.

The embodiments of the present technology are not limited to the above-mentioned embodiments and various modifications can be made without departing from the gist of the present technology.

For example, although the cleaning robot 201 does not include the data obtaining unit 2 that obtains the surrounding environment information as in the pet-type robot 101 in the third embodiment described above, the cleaning robot 201 may include the data obtaining unit 2. Accordingly, the spatio-temporal map can be generated by using various types of data obtained by the data obtaining unit of the cleaning robot.

The pet-type robot is exemplified as the autonomous behavior robot that communicates with the user in the above-mentioned embodiments, though not limited thereto. It is sufficient to employ an autonomous behavior robot that autonomously communicates with a user, the robot including a bipedal, quadrupedal, or another movement means and autonomously behaving irrespective of whether or not a human instruction is required.

### Reference Signs List

1 pet-type robot (autonomous behavior robot, information processing apparatus)
2 data obtaining unit
5 battery
7 additional information determining unit
8 map generating unit
11 behavior control signal generating unit
21 camera (image obtaining unit)
22 human sensor (person detecting unit)23 microphone (sound obtaining unit)
24 GPS (position data obtaining unit)
30, 130, 230 autonomous behavior robot control system
101 first pet-type robot (first autonomous behavior robot)
102 second pet-type robot (second autonomous behavior robot)
112, 212 server (information processing apparatus)
201 cleaning robot (second autonomous behavior robot)

## Claims

1. An information processing apparatus, comprising:
a map generating unit (8) configured to generate a spatio-temporal map on a basis of data obtained by a data obtaining unit (2) of an autonomous behavior robot (1), the autonomous behavior robot including the data obtaining unit (2) that obtains data related to surrounding environment information; and
a behavior control signal generating unit (11) configured to:
generate a behavior control signal for the autonomous behavior robot (1) to move and obtain data from the data obtaining unit (2) in order to obtain information to be added to the spatio-temporal map,
wherein the spatio-temporal map includes person information, person action information, person state information, object information, and object state information that spatially and temporally change, and
wherein the spatio-temporal map includes correlation information in which at least two of space information, time information, person information, person action information, person state information, object information, and object state information are associated with each other; and wherein the behavior control signal is generated on a basis of the correlation information.

2. The information processing apparatus according to claim 1, further comprising
an additional information determining unit (7) configured to determine the information to be added.

3. The information processing apparatus according to claim 1 or claim 2, wherein
the information to be added is environment information of a spatio-temporal region the information of which is insufficient.

4. The information processing apparatus according to any one of claims 1 to 3, wherein
the information to be added is environment information after a certain period elapses from a start of generation of the spatio-temporal map.

5. The information processing apparatus according to any one of claims 1 to 4, wherein
the autonomous behavior robot (1) includes a battery (5) that supplies power supply of the autonomous behavior robot, and
the behavior control signal generating unit (11) is configured to generate the behavior control signal on a basis of battery charge of the battery (5).

6. The information processing apparatus according to any one of claims 1 to 5, wherein
the behavior control signal generating unit (11) is configured to generate the behavior control signal on a basis of a user instruction.

7. The information processing apparatus according to any one of claims 1 to 6, wherein
the data obtaining unit (2) includes an image obtaining unit (21) configured to obtain image data as the data related to the environment information.

8. The information processing apparatus according to any one of claims 1 to 7, wherein
the data obtaining unit (2) includes a sound obtaining unit (23) configured to obtain surrounding-sound data as the data related to the environment information.

9. The information processing apparatus according to any one of claims 1 to 8, wherein
the data obtaining unit (2) includes a position data obtaining unit (24) configured to obtain position data as the data related to the environment information.

10. The information processing apparatus according to any one of claims 1 to 9, wherein
the data obtaining unit (2) includes a person detecting unit (22) configured to detect presence of a person as the data related to the environment information.

11. An information processing method, including:
generating a spatio-temporal map on the basis of data obtained by a data obtaining unit of an autonomous behavior robot, the autonomous behavior robot including the data obtaining unit that obtains data related to surrounding environment information;
causing the autonomous behavior robot to move according to a behavior control signal and causes the data obtaining unit to obtain the data in order to obtain information to be added to the spatio-temporal map,
wherein the spatio-temporal map includes person information, person action information, person state information, object information, and object state information that spatially and temporally change, and wherein the spatio-temporal map includes correlation information in which at least two of space information, time information, person information, person action information, person state information, object information, and object state information are associated with each other; and wherein the behavior
control signal is generated on a basis of the correlation information.

12. The information processing method according to claim 11, wherein
the information to be added is environment information of a spatio-temporal region the information of which is insufficient.

13. The information processing method according to claim 11 or claim 12, wherein
the information to be added is environment information after a certain period elapses from a start of generation of the spatio-temporal map.

14. A program for causing an information processing apparatus to execute processing including:
a step of generating a spatio-temporal map on the basis of data obtained by a data obtaining unit of an autonomous behavior robot, the autonomous behavior robot including the data obtaining unit that obtains data related to surrounding environment information; and
a step of causing the autonomous behavior robot to move according to a behavior control signal and causes the data obtaining unit to obtain the data in order to obtain information to be added to the spatio-temporal map,
wherein the spatio-temporal map includes person information, person action information, person state information, object information, and object state information that spatially and temporally change, and
wherein the spatio-temporal map includes correlation information in which at least two of space information, time information, person information, person action information, person state information, object information, and object state information are associated with each other and wherein the behavior control signal is generated on a basis of the correlation information.

## Patentansprüche

1. Informationsverarbeitungsvorrichtung, umfassend:
eine Kartenerzeugungseinheit (8), konfiguriert zum Erzeugen einer räumlich-zeitlichen Karte auf einer Basis von Daten, erlangt durch eine Datenerlangungseinheit (2) eines Roboters mit autonomem Verhalten (1), wobei der Roboter mit autonomem Verhalten die Datenerlangungseinheit (2) enthält, die Daten in Bezug auf Informationen über die umgebende Umgebung erlangt; und
eine Verhaltenssteuersignal-Erzeugungseinheit (11), konfiguriert zum:
Erzeugen eines Verhaltenssteuersignals für den Roboter mit autonomem Verhalten (1) zum Bewegen und Erlangen von Daten von der Datenerlangungseinheit (2), um Informationen zu erlangen, die zu der räumlich-zeitlichen Karte hinzugefügt werden sollen,
wobei die räumlich-zeitliche Karte Personeninformationen, Personenaktionsinformationen, Personenstatusinformationen, Objektinformationen und Objektstatusinformationen enthält, die sich räumlich und zeitlich verändern, und
wobei die räumlich-zeitliche Karte Korrelationsinformationen enthält, in denen mindestens zwei von Rauminformationen, Zeitinformationen, Personeninformationen, Objektinformationen und Objektstatusinformationen miteinander assoziiert sind; und wobei das Verhaltenssteuersignal auf einer Basis der Korrelationsinformationen erzeugt wird.

2. Informationsverarbeitungsvorrichtung nach Anspruch 1, ferner umfassend
eine Einheit zum Bestimmen zusätzlicher Informationen (7), konfiguriert zum Bestimmen der Informationen, die hinzugefügt werden sollen.

3. Informationsverarbeitungsvorrichtung nach Anspruch 1 oder Anspruch 2, wobei
die Informationen, die hinzugefügt werden sollen, Umgebungsinformationen einer räumlich-zeitlichen Region sind, deren Informationen unzureichend sind.

4. Informationsverarbeitungsvorrichtung nach einem der Ansprüche 1 bis 3, wobei
die Informationen, die hinzugefügt werden sollen, Umgebungsinformationen sind, nachdem eine bestimmte Periode von einem Beginn der Erzeugung der räumlich-zeitlichen Karte verstreicht.

5. Informationsverarbeitungsvorrichtung nach einem der Ansprüche 1 bis 4, wobei
der Roboter mit autonomem Verhalten (1) eine Batterie (5) enthält, die die Leistungsversorgung des Roboters mit autonomem Verhalten zuführt, und
die Verhaltenssteuersignal-Erzeugungseinheit (11) konfiguriert ist zum Erzeugen des Verhaltenssteuersignals auf einer Basis einer Batterieladung der Batterie (5).

6. Informationsverarbeitungsvorrichtung nach einem der Ansprüche 1 bis 5, wobei
die Verhaltenssteuersignal-Erzeugungseinheit (11) konfiguriert ist zum Erzeugen des Verhaltenssteuersignals auf einer Basis einer Benutzeranweisung.

7. Informationsverarbeitungsvorrichtung nach einem der Ansprüche 1 bis 6, wobei
die Datenerlangungseinheit (2) eine Bilderlangungseinheit (21) enthält, konfiguriert zum Erlangen von Bilddaten als die Daten, die zu den Umgebungsinformationen in Beziehung stehen.

8. Informationsverarbeitungsvorrichtung nach einem der Ansprüche 1 bis 7, wobei
die Datenerlangungseinheit (2) eine Tonerlangungseinheit (23) enthält, konfiguriert zum Erlangen von Daten des umgebenden Tons als die Daten, die zu den Umgebungsinformationen in Beziehung stehen.

9. Informationsverarbeitungsvorrichtung nach einem der Ansprüche 1 bis 8, wobei
die Datenerlangungseinheit (2) eine Positionsdatenerlangungseinheit (24) enthält, konfiguriert zum Erlangen von Positionsdaten als die Daten, die zu den Umgebungsinformationen in Beziehung stehen.

10. Informationsverarbeitungsvorrichtung nach einem der Ansprüche 1 bis 9, wobei
die Datenerlangungseinheit (2) eine Personendetektionseinheit (22) enthält, konfiguriert zum Detektieren der Anwesenheit einer Person als die Daten, die zu den Umgebungsinformationen in Beziehung stehen.

11. Informationsverarbeitungsverfahren, enthaltend:
Erzeugen einer räumlich-zeitlichen Karte auf der Basis von Daten, erlangt durch eine Datenerlangungseinheit eines Roboters mit autonomem Verhalten, wobei der Roboter mit autonomem Verhalten die Datenerlangungseinheit enthält, die Daten in Bezug auf Informationen über die umgebende Umgebung erlangt;
Veranlassen des Roboters mit autonomem Verhalten zum Bewegen gemäß einem Verhaltenssteuersignal und Veranlassen der Datenerlangungseinheit zum Erlangen der Daten, um Informationen zu erlangen, die zu der räumlich-zeitlichen Karte hinzugefügt werden sollen,
wobei die räumlich-zeitliche Karte Personeninformationen, Personenaktionsinformationen, Personenstatusinformationen, Objektinformationen und Objektstatusinformationen enthält, die sich räumlich und zeitlich verändern, und wobei die räumlich-zeitliche Karte Korrelationsinformationen enthält, in denen mindestens zwei von Rauminformationen, Zeitinformationen, Personeninformationen, Personenaktionsinformationen, Personenstatusinformationen, Objektinformationen und Objektstatusinformationen miteinander assoziiert sind; und wobei das Verhaltenssignal auf einer Basis der Korrelationsinformationen erzeugt wird.

12. Informationsverarbeitungsverfahren nach Anspruch ll, wobei
die Informationen, die hinzugefügt werden sollen, Umgebungsinformationen einer räumlich-zeitlichen Region sind, deren Informationen unzureichend sind.

13. Informationsverarbeitungsverfahren nach Anspruch ll oder Anspruch 12, wobei
die Informationen, die hinzugefügt werden sollen, Umgebungsinformationen sind, nachdem eine bestimmte Periode von einem Beginn der Erzeugung der räumlich-zeitlichen Karte verstreicht.

14. Programm zum Veranlassen einer Informationsverarbeitungsvorrichtung, eine Verarbeitung auszuführen, enthaltend:
einen Schritt des Erzeugens einer räumlich-zeitlichen Karte auf der Basis von Daten, erlangt durch eine Datenerlangungseinheit eines Roboters mit autonomem Verhalten, wobei der Roboter mit autonomem Verhalten die Datenerlangungseinheit enthält, die Daten in Bezug auf Informationen über die umgebende Umgebung erlangt; und
einen Schritt des Veranlassens des Roboters mit autonomem Verhalten zum Bewegen gemäß einem Verhaltenssteuersignal und Veranlassen der Datenerlangungseinheit zum Erlangen der Daten, um Informationen zu erlangen, die zu der räumlich-zeitlichen Karte hinzugefügt werden sollen,
wobei die räumlich-zeitliche Karte Personeninformationen, Personenaktionsinformationen, Personenstatusinformationen, Objektinformationen und Objektstatusinformationen enthält, die sich räumlich und zeitlich verändern, und
wobei die räumlich-zeitliche Karte Korrelationsinformationen enthält, in denen mindestens zwei von Rauminformationen, Zeitinformationen, Personeninformationen, Personenaktionsinformationen, Personenstatusinformationen, Objektinformationen und Objektstatusinformationen miteinander assoziiert sind, und wobei das Verhaltenssteuersignal auf einer Basis der Korrelationsinformationen erzeugt wird.

## Revendications

1. Appareil de traitement d'informations comprenant :
une unité de génération de carte (8) configurée pour générer une carte spatio-temporelle en fonction de données obtenues par une unité d'obtention de données (2) d'un robot au comportement autonome (1), le robot au comportement autonome comportant l'unité d'obtention de données (2) qui obtient des données relatives à des informations d'environnement proche ; et
une unité de génération de signaux de commande de comportement (11) configurée pour :
générer un signal de commande de comportement permettant au robot au comportement autonome (1) de déplacer et d'obtenir des données à partir de l'unité d'obtention de données (2) afin d'obtenir des informations à ajouter à la carte spatio-temporelle,
dans lequel la carte spatio-temporelle comporte des informations de personne, des informations d'action de personne, des informations d'état de personne, des informations d'objet et des informations d'état d'objet qui changent spatialement et temporellement, et
dans lequel la carte spatio-temporelle comporte des informations de corrélation dans lesquelles au moins deux d'informations spatiales, d'informations temporelles, d'informations de personne, d'informations d'action de personne, d'informations d'état de personne, d'informations d'objet et d'informations d'état d'objet sont associées les unes aux autres ; et
dans lequel le signal de commande de comportement est généré en fonction des informations de corrélation.

2. Appareil de traitement d'informations selon la revendication 1, comprenant en outre
une unité de détermination d'informations supplémentaires (7) configurée pour déterminer les informations à ajouter.

3. Appareil de traitement d'informations selon la revendication 1 ou la revendication 2, dans lequel
les informations à ajouter sont des informations environnementales d'une région spatio-temporelle dont les informations sont insuffisantes.

4. Appareil de traitement d'informations selon l'une quelconque des revendications 1 à 3, dans lequel
les informations à ajouter sont des informations environnementales après qu'un certain laps de temps s'est écoulé depuis un début de génération de la carte spatio-temporelle.

5. Appareil de traitement d'informations selon l'une quelconque des revendications 1 à 4, dans lequel
le robot au comportement autonome (1) comporte une batterie (5) qui alimente électriquement le robot au comportement autonome, et
l'unité de génération de signaux de commande du comportement (11) est configurée pour générer le signal de commande de comportement en fonction de la charge de la batterie (5).

6. Appareil de traitement d'informations selon l'une quelconque des revendications 1 à 5, dans lequel
l'unité de génération de signal de commande de comportement (11) est configurée pour générer le signal de commande de comportement en fonction d'une instruction d'utilisateur.

7. Appareil de traitement d'informations selon l'une quelconque des revendications 1 à 6, dans lequel
l'unité d'obtention de données (2) comporte une unité d'obtention d'images (21) configurée pour obtenir des données d'image en tant que données liées aux informations environnementales.

8. Appareil de traitement d'informations selon l'une quelconque des revendications 1 à 7, dans lequel
l'unité d'obtention de données (2) comporte une unité d'obtention de son (23) configurée pour obtenir des données de son environnant en tant que données liées aux informations environnementales.

9. Appareil de traitement d'informations selon l'une quelconque des revendications 1 à 8, dans lequel
l'unité d'obtention de données (2) comporte une unité d'obtention de données de position (24) configurée pour obtenir des données de position en tant que données liées aux informations environnementales.

10. Appareil de traitement d'informations selon l'une quelconque des revendications 1 à 9, dans lequel
l'unité d'obtention de données (2) comporte une unité de détection de personne (22) configurée pour détecter la présence d'une personne en tant que données liées aux informations environnementales.

11. Procédé de traitement d'informations, comportant :
la génération d'une carte spatio-temporelle en fonction de données obtenues par une unité d'obtention de données d'un robot au comportement autonome, le robot au comportement autonome comportant l'unité d'obtention de données qui obtient des données liées à des informations d'environnement proche ;
la commande d'un déplacement du robot au comportement autonome conformément à un signal de commande de comportement et
la commande de l'obtention de données par l'unité d'obtention de données afin d'obtenir des informations à ajouter à la carte spatio-temporelle,
dans lequel la carte spatio-temporelle comporte des informations de personne, des informations d'action de personne, des informations d'état de personne, des informations d'objet et des informations d'état d'objet qui changent spatialement et temporellement, et
dans lequel la carte spatio-temporelle comporte des informations de corrélation dans lesquelles au moins deux d'informations spatiales, d'informations temporelles, d'informations de personne, d'informations d'action de personne, d'informations d'état de personne, d'informations d'objet et d'informations d'état d l'objet sont associées les unes aux autres ; et
dans lequel le signal de commande de comportement est généré en fonction des informations de corrélation.

12. Procédé de traitement d'informations selon la revendication 11, dans lequel
les informations à ajouter sont des informations environnementales d'une région spatio-temporelle dont les informations sont insuffisantes.

13. Procédé de traitement d'informations selon la revendication 11 ou la revendication 12, dans lequel
les informations à ajouter sont des informations environnementales après qu'un certain laps de temps s'est écoulé depuis un début de génération de la carte spatio-temporelle.

14. Programme pour amener un appareil de traitement d'informations à exécuter un traitement comportant :
une étape de génération d'une carte spatio-temporelle en fonction de données obtenues par une unité d'obtention de données d'un robot au comportement autonome, le robot au comportement autonome comportant l'unité d'obtention de données qui obtient des données relatives à des informations d'environnement proche ; et
une étape de commande de déplacement du robot au comportement autonome conformément à un signal de commande de comportement et de commande de l'obtention de données par l'unité d'obtention de données afin d'obtenir des informations à ajouter à la carte spatio-temporelle,
dans lequel la carte spatio-temporelle comporte des informations de personne, des informations d'action de personne, des informations d'état de personne, des informations d'objet et des informations d'état d'objet qui changent spatialement et temporellement, et
dans lequel la carte spatio-temporelle comporte des informations de corrélation dans lesquelles au moins deux d'informations spatiales, d'informations temporelles, d'informations de personne, d'informations d'action de personne, d'informations d'état de personne, d'informations d'objet et d'informations d'état d'objet sont associées les unes aux autres ; et
dans lequel le signal de commande de comportement est généré en fonction des informations de corrélation.
